(19) Europäisches Patentamt

European Patent Office

Office européen des brevets

(11) **EP 1 031 442 A2**

(12) **EUROPÄISCHE PATENTANMELDUNG**

(43) Veröffentlichungstag:
**30.08.2000 Patentblatt 2000/35**

(51) Int. Cl.⁷: **B60C 23/06**, B60C 23/04

(21) Anmeldenummer: **00103356.2**

(22) Anmeldetag: **22.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.02.1999 DE 19908701**

(71) Anmelder:
• **Continental Aktiengesellschaft**
  **30165 Hannover (DE)**
• **Continental Teves AG & Co. oHG**
  **60441 Frankfurt am Main (DE)**

(72) Erfinder:
• **Becherer, Thomas, Dr.**
  **30159 Hannover (DE)**
• **Gerhard, Ernst, Dr.**
  **30629 Hannover (DE)**
• **Oldenettel, Holger**
  **30826 Garbsen (DE)**
• **Köbe, Andreas, Dr.**
  **30167 Hannover (DE)**
• **Huinink, Heinrich**
  **30823 Garbsen (DE)**
• **Fennel, Helmut**
  **65812 Bad Soden (DE)**
• **Latarnik, Michael, Dr.**
  **61381 Friedrichsdorf (DE)**

(54) **Verfahren und Vorrichtung zur Ermittlung des Notlaufzustandes eines Luftreifens**

(57) Verfahren zur Ermittlung des Notlaufzustandes eines Luftreifens für Kraftfahrzeugräder, bei denen eine permanent vorhandene und zur Raddrehzahl proportionale Schwingung als Drehzahl-Ausgangssignal einer Signalverarbeitungseinrichtung zugeleitet wird und ein oder mehrere für den Notlaufzustand charakteristische und separat definierte Schwingungen, dem Drehzahl-Ausgangssignal überlagert werden.

FIG. 1

**EP 1 031 442 A2**

## Beschreibung

Die Erfindung betrifft ein Verfahren zur Ermittlung des Notlaufzustandes eines Luftreifens für Kraftfahrzeugräder, bei dem mindestens an jeder Achse, vorzugsweise an jedem Rad, eine permanent vorhandene erste periodische und zur Raddrehzahl proportionale Schwingung erzeugt und als Drehzahl-Ausgangssignal einer Signalverarbeitungseinrichtung zugeleitet wird, wobei das Drehzahl- Ausgangssignal durch aktive oder passive Magnetfeldsensoren bereitgestellt wird, indem relativ zu letzteren rotierende magnetisch aktive oder passive und an mit dem Rad drehenden oder an feststehenden Teilen des Fahrzeuges befindliche Einrichtungen, vorzugsweise Encoder, eine zur Raddrehzahl proportionale periodische Magnetfeldänderung erzeugen.

Die ständig steigenden Ansprüche an die Sicherheit von Kraftfahrzeugen erfordern zunehmend eine möglichst umfassende Detektion aller den Fahr- und Bewegungszustand eines Kraftfahrzeuges beeinflussenden und repräsentierenden Parameter zur Nutzung innerhalb intelligenter Systeme zur Fahrwerks- und Fahrzeugsteuerung und -regelung. Insbesondere typische Gefahrensituationen, wie sie etwa bei einem plötzlichen Druckverlust in einem Reifen auftreten können, sollen sicher erkannt werden und entsprechende Warn- oder Steuersignale auslösen.

Eine Reihe von Entwicklungen nähert sich dem Sicherheitsanspruch von anderer Seite, indem z. B. der besonders kritische Fall eines plötzlichen Druckverlustes in einem Reifen in seinen fatalen Auswirkungen dadurch entschärft werden soll, daß Einrichtungen am Fahrzeugrad oder in der Reifenkonstruktion eingesetzt werden, die auch bei Druckverlust einen stabilen Fahrzustand und eine Notlauffähigkeit über eine bestimmte Strecke oder Zeit erhalten. Solche Entwicklungen werden auch dadurch unterstützt, daß im Rahmen der zur Energieeinsparung kontinuierlich reduzierten Gewichte der Fahrzeuge auf das Mitführen von Reserverädern und/oder nötigem Werkzeug zu deren Montage verzichtet werden soll.

Unter Notlauf oder Notlaufzustand wird hierbei der Fahrzustand verstanden, bei dem durch einen plötzlichen Druckverlust in einem Reifen, etwa durch eine äußere Beschädigung, die normalerweise vorhandenen Führungs-, Haftungs- und Stabilisierungseigenschaften des Reifens als Bindeglied zwischen Fahrzeug und Fahrbahn nicht mehr im ursprünglichen Maße vorhanden sind, bei dem jedoch trotzdem eine Lauffähigkeit und Nutzbarkeit soweit erhalten bleibt, daß die Sicherheit eines Fahrzeuges nicht unzulässig eingeschränkt wird. Der Notlaufzustand ermöglicht es dann, die Fahrt für eine bestimmte Strecke problemlos fortzusetzen, mindestens aber bis zum nächsten Reparaturbetrieb.

Solche seit Jahrzehnten diskutierten Notlaufsysteme weisen in ihren modernen Ausbildungen, z.

B. als auf der Felge aufgezogene Notlaufstützkörper oder als seitenwandverstärkte Reifen, in Verbindung mit dem heute üblichen Fahrzeug- und Federungskomfort den generellen Nachteil auf, daß ein Notlaufzustand vom Fahrer nicht mehr aufgrund eines zum Normalzustand stark unterschiedlichen Verhaltens des Fahrzeuges bemerkt wird, wonach die Gefahr besteht, daß die regelmäßig zeitlich oder in Bezug auf die Fahrkilometer begrenzte Notlauffähigkeit überstrapaziert wird und schließlich ein Totalausfall eines Reifens oder Rades die Folge sein kann, der dann wieder zu erheblichen Gefahren für Fahrzeug und Insassen führen kann.

Um dieser Gefahr zu begegnen, wurden beispielsweise bereits eine Reihe von mechanisch-akustischen Warneinrichtungen erdacht, die durch starke Vibrationen bzw. Geräusche eine Warnung für den Fahrer bereitstellen.

Hierzu offenbart die DE 25 38 948 A1 ein luftbereiftes Fahrzeugrad mit einem innerhalb eines schlauchlosen Reifens befindlichen Notlaufring, der an seiner im Notlaufzustand den Reifen abstützenden Wirkfläche, d. h. an seiner Notlauffläche, mit einem oder mehreren über den Umfang verteilt angeordneten Vorsprüngen zur Fahrerwarnung versehen ist, die im Falle eines plötzlichen Druckverlustes des Reifens und der darauf folgenden Anlage der Innenseite des Laufstreifenbereiches am Notlaufring Vibrationen verursachen sollen, die den Fahrer auf den Luftverlust aufmerksam machen.

Auch die DE 25 09 939 A1 zeigt einen Notlaufstützkörper, hier einen Notlaufschlauch, der im äußeren Bereich einen hohlzylindrischen Körper aus Metall oder hartem Kunststoff und an dessen Außenfläche am Umfang verteilte kugelkalottenförmige Ausbuchtungen aufweist, die beim Tätigwerden des Notlaufschlauches ein hörbares Geräusch erzeugen, das einen Defekt des Luftreifens anzeigen soll.

Die JP 91 69 203 A zeigt hierzu innerhalb des Reifens und auf der Feige angeordnete Ringstücke aus Gummi, die im Notlauf die Innenseite des Laufflächenbereiches des Reifens abstützen. Die hier offenbarten Ringstücke oder Ringabschnitte stützen dabei nicht über den gesamten Umfang des Abrollradius den Reifen ab, sondern lediglich über Teilbereiche, die bis zu 180° voneinander versetzt ausgebildet sein können. Auch hierdurch soll bei entsprechendem Luftverlust eine Vibration erzeugt werden, die in Form eines hörbaren Geräusches oder durch Übertragung auf Lenkelemente den Fahrer über einen Luftverlust informiert.

Der Nachteil solcher mechanisch-akustischen Warneinrichtungen liegt im wesentlichen darin, daß bei der heute üblichen ausgezeichneten Dämpfung und Abkopplung zwischen Fahrwerk und Karosserie in Verbindung mit einem gewünschten hohen Federungs- und Fahrkomfort und einer guten Schallschutzisolierung des Fahrzeuginnenraumes, die entstehenden Geräusche oder Vibrationen vom Fahrer nicht mehr zuverlässig detektiert werden oder aber in einer solchen Stärke erzeugt werden müßten, daß ein Weiterfahren schlichtweg nicht mehr möglich ist.

Die weitere Entwicklung konzentriert sich demzufolge darauf, einen Notlaufzustand mit Meßmitteln zu erfassen und über optische und akustische Warneinrichtungen im Fahrzeug dem Fahrer zur Kenntnis zu bringen. Hierzu sind im wesentlichen zwei grundsätzliche Möglichkeiten bekannt, nämlich einerseits die direkte Messung des Luftdrucks innerhalb eines Reifens und andererseits die indirekte Bestimmung des Luftdruckes eines Reifens, z.B. über ein durch eine Luftdruckänderung beeinflußtes Federungsverhalten des Reifens oder über eine durch die Luftdruckänderung bedingte Änderung des Abrollradius bzw. des dynamischen Abrollumfangs eines Rades, d.h. durch eine Drehzahländerung.

Eine direkte Luftdruckmessung, beispielsweise über Druckmeßdosen im Reifeninneren, stellt zwar eine sichere Methode der Detektion dar, hat aber einen hohen Aufwand an Aufnahme-, Energieversorgungs- und Übertragungssystemen zur Folge, mit dem die innerhalb des drehenden Reifens gemessenen Luftdruckänderungen an die fest im Fahrzeug installierten Meßwertaufnehmer und damit an die Verarbeitungselektronik übergeben werden können.

Die EP 630 769 A1 zeigt hierzu eine Reifendruckdetektionseinrichtung für LKW-Reifen, bei der ein innerhalb eines in der Felge angeordneten Radbolzens eingesetzter Druckaufnehmer, der über Schlauchverbindungen mit dem Reifenventil verbunden ist, den Luftdruck im Reifen prüft und die so ermittelten Meßergebnisse über rotierende Antennen, die am Radträger und an der Achse benachbart angeordnet sind, in das Fahrzeug bzw. zu einer Verarbeitungseinheit überträgt.

Die hier für die großzügigen Einbauverhältnisse eines LKW-Rades konzipierte Vorrichtung erfordert einen hohen Aufwand an zusätzlichen und das Gesamtsystem verteuernden Bauteilen, ist äußerst wartungsintensiv und anfällig gegen mechanische Beschädigungen und Verschmutzungen, erschwert einen Reifenwechsel und stellt zudem durch die notwendige Anordnung an allen Reifen ein System dar, welches aufgrund der hohen Komplexität für Sensoren, Verkabelung und weiteren zusätzlichen Bauteilen eine wirtschaftliche Produktion auch in der Großserie und insbesondere bei PKW-Reifen in Frage stellt.

Auf der anderen Seite weisen Druckverlustwarnsysteme, die auf der Erfassung des dynamischen Abrollumfangs basieren, eine Reihe von Umwägbarkeiten auf, die zu ungenauen Messungen oder Entscheidungen führen. Diese Unwägbarkeiten entstehen u. a. dadurch, daß der dynamische Abrollumfang nicht nur durch den Innendruck eines Reifens, sondern auch durch die Belastungszustände während der Fahrt, durch Temperaturen, durch unterschiedliche Geschwindigkeiten, durch Profilverschleiß, durch den Einfluß des Straßenbelages sowie durch unterschiedliche Beschleunigungs- oder Bremszustände stark beeinflußt werden kann.

Die EP 826 525 A2 offenbart eine Vorrichtung zur Detektion eines Luftverlustes in einem Reifen, bei der alle vier Reifen bzw. Räder mit Einrichtungen versehen sind, die ein von der Raddrehzahl abhängiges pulsförmiges Signal einem Rechner übermitteln, der hieraus die Rotationsgeschwindigkeit der vier Räder bzw. Reifen ermittelt und diese untereinander vergleicht, um einen Druckabfall zu detektieren.

Die EP 787 606 A2 offenbart ein Verfahren, bei dem nach Detektion der Rotationsgeschwindigkeiten bzw. Winkelgeschwindigkeiten der vier Räder ein Vergleich mit den entsprechenden Werten diagonal gegenüberliegender Räder durchgeführt wird und daraus ein Warnsignal bei detektiertem Druckverlust ausgelöst wird.

Die EP 786 362 A2 offenbart ein Verfahren, bei dem ebenfalls der dynamische Abrollumfang bzw. damit verbundene Größen, wie etwa der dynamische Rollradius eines Reifens an allen vier Rädern ermittelt wird und bei dem zusätzlich die Längs- und Querbeschleunigung geprüft wird, um die dadurch verursachten Fehlinterpretationen zu erkennen und das Signal für einen Druckverlust abzusichern.

Die Nachteile und Schwierigkeiten, die all diesen Verfahren und Vorrichtungen bei der Detektion und der sicheren Aussage über einen Druckverlust anhängen, werden deutlich, wenn man sich vergegenwärtigt, daß die Änderungen des dynamischen Abrollumfanges durch eine Reihe von verschiedenen Parametern gravierend beeinflußt werden. So ändert sich der Abrollumfang nicht nur mit dem Fülldruck, sondern auch merkbar durch eine Geschwindigkeitsänderung, durch eine Profiltiefenänderung, durch den Fahrbahnbelag, hier z. B. im Vergleich von Asphalt zu Beton und durch die normale Serienstreuung. Eine meßtechnische Aufnahme dieser unterschiedlichen Einflußgrößen und deren elektronische Verarbeitung zu einem sicheren Signal ist daher bisher unzureichend gelöst und ausgesprochen schwierig.

Eine weitere große Unsicherheit bei Messungen zur Luftdruckbestimmung allein aufgrund des aktuellen Abrollumfanges entsteht dadurch, daß der Einfluß des Fülldrucks und der Geschwindigkeit auf den Abrollumfang für Reifen unterschiedlicher Fabrikate bzw. unterschiedlichen Aufbaus sehr verschieden ist. So kann z. B die Fülldruckabhängigkeit bei einem Reifen mit stumpfem Gürtelwinkel wesentlich größer sein als bei einem Reifen mit spitzem Gürtelwinkel. Außerdem wird die Differenz der Abrollumfänge durch unterschiedliche Abnutzung der Reifen oder durch einen Reifenwechsel in einem solchen Maße geändert, daß die offenbarten Verfahren und Vorrichtungen mit ihrer vorgestellten Logik eine Warnung auslösen, obwohl eine Gefahrensituation nicht gegeben ist. Um dieses zu vermeiden, müßte z. B. die Abnutzung von Reifen mit separaten Methoden erkennbar und die jeweilige Reifenkonstruktion stets bekannt sein.

Der Absolutwert des Abrollumfanges ist also zur Warnungsmeldung relativ ungeeignet. Auch die Differenz zwischen den Abrollumfängen aller Reifen an einem Fahrzeug führt noch nicht zu einer sicheren Aussage, da z. B. unterschiedliche Abnutzungen oder das Aufziehen neuer Reifen nicht erkannt werden oder auch ein schleichender Luftdruckverlust an zwei oder mehr Reifen nicht ermittelt werden kann. Zur Kompensation solcher Unwägbarkeiten müßte eine ständig neue Kalibrierung - auch abhängig von der Fahrtstrecke - erfolgen, was das System verteuert und die Handhabung relativ unsicher werden läßt, da eine Neukalibrierung während der Fahrt natürlich vom Fahrer des Fahrzeuges durchgeführt werden muß.

Eine weitere im Stand der Technik bekannte Methode zur Detektion eines Notlaufes besteht darin, das im Vergleich zum Normallauf unterschiedliche Schwingungs- oder Beschleunigungsverhalten eines Rades zu erfassen, welches durch das Abrollen eines luftlosen Reifens oder durch das Aufsetzen und Inkrafttreten einer Notlauffläche entsteht.

Die EP 0 651 702 offenbart hierzu ein Verfahren zur Erfassung des Notlaufzustandes, wobei für den Notlauf charakteristische Beschleunigungen oder Resonanzschwingungen höherer Ordnung (über 100 Hz), die durch das Abrollen auf Notlaufflächen entstehen, an Karossierie- oder Fahrwerksaufhängungen durch entsprechende Beschleunigungssensoren aufgenommen werden.

Die EP 700 798 A1 zeigt ein Verfahren, bei dem sowohl über die Messung des Abrollumfanges Geschwindigkeits- bzw. Drehzahlsignale verarbeitet, als auch beim Notlauf auftretende Vibrationen detektiert werden, die aus dem bereits genannten unterschiedlichen Verhalten eines im Notlauf befindlichen Reifens im Vergleich zum Normalzustand resultieren.

Auch diesen Verfahren bzw. Vorrichtungen liegt der Nachteil zugrunde, daß ein typisches Vibrations- oder Schwingungsverhalten im Notlauf nicht vorhanden und daher schwer bestimmbar und detektierbar ist, da auch im Notlauf die unterschiedliche Reifenkonstruktion, die Fahrbahnbeschaffenheit, die Geschwindigkeit, die unterschiedlichen Beschleunigungs- oder Bremsvorgänge eine so starke Überlagerung bzw. Beeinflussung verursachen, daß eine saubere Trennung zwischen Störgrößen und Notlauf kaum möglich ist.

Für die Erfindung bestand daher die Aufgabe, ein Verfahren zur Ermittlung des Notlaufzustandes eines Luftreifens bereitzustellen, welches eine sichere Detektion des Notlaufzustandes in allen Fahrzuständen erlaubt, welches alle auftretenden Stör- und Einflußgrößen toleriert, welches bei allen Reifen- und Fahrzeuggrößen und bei allen Reifenkonstruktionen gleichermaßen einsetzbar ist, welches Meßgrößen sicher und auf einfachste Weise, ohne großen konstruktiven oder meßtechnischen Aufwand erfaßbar macht, und welches zudem wirtschaftlich einsetzbar und für Großserien verfügbar ist.

Gleichermaßen wird eine Vorrichtung bekannt gemacht, welche in besonderer Weise zur Durchführung des erfindungsgemäßen Verfahrens geeignet ist.

Gelöst wird die Aufgabe durch die Merkmale des Hauptanspruchs, wobei im Notlaufzustand eine oder mehrere separat definierte, für den Notlaufzustand charakteristische und zur Raddrehzahl proportionale periodische Schwingungen der ersten Schwingung bzw. dem Drehzahl-Ausgangssignal überlagert werden, und wobei die Signalverarbeitungseinrichtung eine Überlagerung der ersten periodischen Schwingung mit der/den separat definierten und für den Notlaufzustand charakteristischen periodischen Schwingung(en) detektiert und zu einem Warnsignal verarbeitet.

Durch die Überlagerung der ersten proportionalen Schwingung durch eine oder mehrere separat definierte, für den Notlauf charakteristische und zur Raddrehzahl proportionalen periodische Schwingungen wird ein ausschließlich für den Notlauf spezifisches Charakteristikum erschaffen, welches unabhängig von Einflußgrößen wie Geschwindigkeit, Radlast, Reifenverschleiß, Fahrbahnbelag etc. ein eindeutig erkennbares Signal liefert. Beim Auftreten eines solchen Signales kann daher zweifelsfrei auf das Vorliegen eines Notlaufzustandes geschlossen werden, ohne daß weitere Überprüfungen des Fahrzustandes erfolgen müssen. Im vielen Fällen ist zur sicheren Erkennbarkeit bereits die Überlagerung des Drehzah-Ausgangssignales mit nur einer zweiten für den Notlauf charakteristischen und zur Raddrehzahl proportionalen periodischen Schwingung ausreichend.

Hierbei wird vorteilhafterweise das Drehzahl-Ausgangssignal in Form einer permanent vorhandenen ersten periodischen und zur Raddrehzahl proportionalen Schwingung durch aktive oder passive Magnalfeldsensoren bereitgestellt, wobei relativ zur letzteren rotierende magnetisch aktive oder passive und an mit dem Rad drehenden oder an feststehenden Teilen des Fahrzeuges befindliche Einrichtungen, vorzugsweise Encoder, eine zur Raddrehzahl proportionale periodische Magnetfeldänderung erzeugen.

Durch eine solche Ausbildung des Verfahrens lassen sich einfache und bereits vorhandene und erprobte Meßwertaufnehmer und Signalerzeuger nutzen, so daß der apparative Aufwand verringert wird und eine kostengünstige Produktion der zugehörigen Vorrichtungsteile ermöglicht wird.

In einer vorteilhaften Ausbildung werden die separat definierten für den Notlaufzustand charakteristischen und zur Raddrehzahl proportionalen periodischen Schwingungen mit einer am Fahrzeugrad vorgesehenen Notlaufeinrichtung zur Fortsetzung der Fahrt im beschädigten oder luftlosen Zustand der Reifen erzeugt.

Das Erzeugen der zweiten oder auch weiterer Schwingungen durch eine solche Notlaufeinrichtung, die in aller Regel in Form eines oder mehrerer Stützkörper im oder am Rad oder Reifen oder in Form von Verstärkungen im Reifenkörper ausgebildet ist, erlaubt eine sehr einfache und in Bezug auf die dazu nötigen Mittel sehr kostengünstige Lösung zur Erzeugung einer oder mehrerer separat definierter und für den Notlaufzustand charakteristischer, eindeutig erkennbarer periodischer Schwingungen.

In einer weiteren vorteilhaften Ausbildung des Verfahrens werden die für den Notlaufzustand charakteristischen, separat definierten und zur Raddrehzahl proportionalen periodischen Schwingungen mit einem innerhalb des Luftreifens auf der Felge angeordneten und mit Unstetigkeiten, vorzugsweise ausgebildet als Kavitäten oder Einbuchtungen, an seinem Abrollumfang versehenen Notlaufstützkörper erzeugt.

Dadurch wird die Erzeugung der für den Notlauf definierten zweiten oder auch weiterer Schwingungen weiter vereinfacht, wobei zusätzlich die Art der Schwingungen in beliebiger und für das Fahrzeug angepaßter Weise im Hinblick auf eine deutliche Signalunterscheidung ausgeprägt werden kann. So lassen sich die auf dem Abrollumfang angeordneten Unstetigkeiten als Einbuchtungen oder Vorsprünge in Größe und Anzahl so anordnen, daß im Notlaufzustand eine oder mehrere von den durch Fahrzustände verursachten üblichen Schwingungen deutlich unterschiedliche Signalschwingung verursacht wird, die das Drehzahlausgangssignal in eindeutig erkennbarer Weise verändert.

Eine in gleicher Weise vereinfachte und vorteilhafte Erzeugung der für den Notlauf definierten zweiten oder auch weiterer Schwingungen ergibt sich dadurch, daß die für den Notlaufzustand charakteristischen und zur Raddrehzahl proportionalen periodischen Schwingungen mit einer oder mehreren innerhalb des Reifenkörpers, vorzugsweise im Seitenwandbereich, ausgebildeten und den Reifen bei Luftverlust im Notlauf stabilisierenden, gegebenenfallls aus verschiedenen Schichten und / oder Lagen von Festigkeitsträgern aufgebauten Materialverstärkungen erzeugt werden, wobei die Materialverstärkungen über ihren Umfang verteilte definierte Unstetigkeiten, vorzugsweise ausgebildet als Materialanhäufungen oder Materialfehlstellen, aufweisen. Hierdurch können zusätzliche Notlaufstützkörper entfallen, allerdings mit dem auftretenden leichten Nachteil, daß die Reifen als solche ein höheres Gewicht aufweisen, sodaß hier eine auf den Einzelfall bezogene Auswahl der anzuwendenden Verfahrensausbildungen durchgeführt werden muß.

Weitere vorteilhafte Ausbildungen des Verfahrens bestehen darin, daß die für den Notlaufzustand charakteristischen und zur Raddrehzahl proportionalen periodischen Schwingungen durch eine erste Anzahl von gleichmäßig über den Umfang verteilten Unstetigkeiten, oder durch eine erste Anzahl und eine zur ersten Anzahl unterschiedliche zweite Anzahl von gleichmäßig über den Umfang verteilten Unstetigkeiten erzeugt werden.

Hierdurch wird eine für den Notlauf typische, harmonische Schwingung erzeugt, die als überlagerte Schwingung in einer deutlichen Weise das zur Signalverarbeitungseinrichtung geleitete Drehzahlausgangssignal verändert.

Eine solche harmonische Schwingung, beispielsweise ausgebildet als durch 13 gleichmäßig über den Umfang der Lauffläche verteilte Einbuchtungen erzeugte harmonische Schwingung 13ter Ordnung der Reifenperiode, erweist sich nämlich im Vergleich zu den üblich einwirkenden Störgrößen und Schwingungsveränderungen als ungewöhnlich und damit deutlich detektierbar, wobei die deutliche Erkennung noch dadurch erleichtert werden kann, daß bei der Ausbildung einer ersten Anzahl von gleichmäßig über den Umfang verteilten Kavitäten oder Einbuchtungen und einer zur ersten Anzahl unterschiedlichen zweiten Anzahl von gleichmäßig über den Umfang verteilten Kavitäten zwei harmonische Schwingungen unterschiedlicher Ordnung der Reifenperiode erzeugt werden, deren gemeinsames Auftreten in der Überlagerung des Drehzahl-Ausgangssignales ein völlig sicheres Indiz für das Vorliegen des Notlaufzustandes darstellen.

Ähnliches gelingt im übrigen auch dadurch, daß die für den Notlaufzustand charakteristischen und zur Raddrehzahl proportionalen periodischen Schwingungen durch eine Anzahl von ungleichmäßig über den Umfang verteilten Unstetigkeiten erzeugt werden.

In einer weiteren vorteilhaften Ausbildung des Verfahrens wird das Drehzahl-Ausgangssignal nach einer Verarbeitung in der Signalverarbeitungseinrichtung mit einem oder mehreren Referenz- /oder Schwellenwerten verglichen und mit diesem Vergleich die Überlagerung mit den separaten und für den Notlaufzustand charakteristischen periodischen Schwingungen anhand einer Überschreitung der Referenz- und/oder Schwellenwerte erkannt und zu einem Warnsignal verarbeitet.

Ein solcher an sich bekannter Vergleich mit Referenz- und/oder Schwellenwerten erhöht die Aussagesicherheit bei der Detektion eines Notlaufsignales und eröffnet die Möglichkeit, den Einfluß von Störgrößen weiter zu eleminieren.

Hierbei ist es vorteilhaft, daß das Drehzahl-Ausgangssignal eines Rades oder einer Achse nach einer Verarbeitung in der Signalverarbeitungseinrichtung mit Drehzahl-Ausgangssignalen der übrigen Räder oder Achsen als Referenzwerten verglichen wird. Dies führt zum einen zu einer Lokalisierung des im Notlauf befindlichen Rades und schließt weiterhin aus, daß gleichzeitig auf alle Räder einwirkende Störgrößen, insbesondere bei kurzfristigem Auftreten, nicht zur Auslösung des Notlaufwarnsignales führen. Der Vergleich kann hierbei mit Rädern einer Fahrzeugseite, einer Fahrzeugachse oder auch in Form eines Vergleiches mit diagonal gegenüberliegenden Rädern durchgeführt werden.

In einer weiteren vorteilhaften Ausbildung wird in der Signalverarbeitungseinrichtung aus dem Drehzahl-Ausgangssignal die Radgeschwindigkeit für vorgegebene Zeitintervalle errechnet und mit einem oder mehreren Referenz- Radgeschwindigkeiten und / oder Schwellenwerten verglichen, wobei ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) innerhalb von definierten und mehrere aufeinan-derfolgende Raddrehwinkel beinhaltenden Zählzei-ten $T_L$ aus den für die Teildrehungen ermittelten Zeiten und deren Anzahl eine mittlere Raddrehgeschwindigkeit für eine oder mehrere Radumdrehungen innerhalb der Zählzeiten errechnet und gespeichert wird, wonach
c) die gemittelten Raddrehgeschwindigkeiten bzw. deren Verlauf mit Referenz- und / oder Schwellenwerten verglichen werden, wobei
d) bei Überschreitung der Referenz- und / oder Schwellenwerte ein Warnsignal ausgegeben wird.

Hierbei ist die Basis für die Ermittlung bzw. für die Verarbeitung der entsprechenden Zeiten für die durch die definierten Raddrehwinkel bestimmten Teildrehungen des Rades ein „Zeitfenster", nämlich eine definierte Zählzeit oder Meßzeit $T_L$, auch „Loop Time" genannt.

Eine solche Ermittlung der Radgeschwindigkeit beinhaltet lediglich eine relativ einfache Verarbeitung des Drehzahl-Ausgangssignales und reduziert so den Aufwand an elektronischen Verarbeitungseinrichtungen bzw. an Rechnerkapazität und damit die Kosten für die entsprechende Elektronik. Allerdings ist bei einem solchen Verarbeitungsverfahren des Drehzahl-Ausgangssignales zu berücksichtigen, daß bei der Auswertung der Anzahl der erhaltenen Einzelimpulse innerhalb einer definierten Zählzeit $T_L$ auch Karosserie- oder Aufbauschwingungen oder Resonanzen das Auswertungsergebnis - ohne es notwendigerweise in seiner Aussagekraft wesentlich zu schwächen - beeinflussen und verändern, sodaß eine Abwägung zwischen möglichst einfacher Auswertung und möglichst genauem Auswertungsergebnis erfolgen muß.

Durch das im erfindungsgemäßen Verfahren vorgesehene Überlagern des Drehzahl-Ausgangssignales mit einer oder mehreren separat definierten und für den Notlaufzustand charakteristischen Schwingungen ist es nämlich möglich, eine solche vereinfachte und auf den Absolutwert der aufgenommenen Geschwindigkeit gerichtete Betrachtung und Auswertung durchzuführen, ohne daß weitere und den Fahrzustand repräsentierende Signale, beispielsweise augenblickliche Längs- oder Querbeschleunigungswerte und Geschwindigkeiten erfaßt werden müssen. Deren Detektion über entsprechende Meßwertaufnehmer erfordert nämlich einen hohen apparativen Aufwand und deren elektronische Verarbeitung führt zu einem wesentlich komplizierteren Aufbau in der Elektronik, was somit entbehrlich wird.

Die überlagerten separaten und für den Notlaufzustand charakteristischen Zusatzschwingungen stellen sich in einer solchen Verfahrensweise als Geschwindigkeitsschwingungen dar, d. h. als periodische Geschwindigkeitsänderungen innerhalb eines Radumlaufs, die durch beispielsweise auf einem Notlaufstützkörper aufgebrachte Einbuchtungen oder Unstetigkeiten und den dadurch in differentiell kleinen Zeitabschnitten geänderten Abrollradius erzeugt werden. Diese Schwingungen bewirken dabei eine deutlich merkbare Veränderung der Anzahl der aus dem binären Signal ermittelten Zählimpulse innerhalb des Zählintervalls $T_L$ (Loop-Time).

Eine weitere vorteilhafte Ausbildung des Verfahrens besteht darin, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) ein Mittelwert aus mehreren solchen aufeinanderfolgend ermittelten Zeiten für eine oder mehrere Radumdrehungen errechnet und gespeichert wird, wonach
c) die Abweichungen der gem. a) ermittelten und gespeicherten Zeiten von dem gem. b) errechneten Mittelwert ermittelt werden, und danach
d) die ermittelten Abweichungen mit Referenz- und / oder Schwellenwerten verglichen werden, wobei
e) bei Überschreitung der Referenz- und / oder Schwellenwerte ein Warnsignal ausgegeben wird.

In diesem Fall ist die Basis für die Ermittlung bzw. für die Verarbeitung der entsprechenden Zeiten für die durch die definierten Raddrehwinkel bestimmten Teildrehungen des Rades nicht etwa ein „Zeitfenster", sondern die Teildrehung des Rades als solche, d.h. also die Betrachtung eines definierten Raddrehwinkels bzw. eines „Winkel-Fensters".

Bei den üblicherweise verwandten Sensoreinrichtungen, die gezahnten Polräder oder ähnliche Elemente als Encoder beinhalten, erfolgt dabei in aller Regel zunächst eine Umwandlung des Drehzahl-Ausgangssignales in ein Signal aus Einzelimpulsen bzw. in ein Rechtecksignal. Dies geschieht dabei so, daß die Flanken des Rechtecksignales mit den das Drehzahl-Ausgangssignal repräsentierenden Durchgangs-Signalen der Magnetfeldsensoren, die durch die einzelnen Zähne eines gezahnten Polrades erzeugt werden, so korreliert sind, daß eine Rechteckschwingung des Rechtecksignales beispielsweise einen durch den Durchgang eines Zahnes des Polrades definierten Raddrehwinkel darstellt.

Bei den für die Messung kurzer Zeiten gebräuchlichen Zeitmeßeinrichtungen (Timer), die üblicherweise digitale Eingangesignale zur Verarbeitung benötigen, kann dann die Messung der Zeiten für die durch die definierten Raddrehwinkel bestimmten Teildrehungen des Rades durch die Ermittlung des Flankenabstandes, d.h.der Zeitdifferenzen zwischen den Flanken des Rechtecksignales erfolgen. Sinnvollerweise betrachtet man bei einer solchen Auswertung einer Rechteckschwingung den Flankenabstand bzw. die Zeitdifferenz zwischen den Nulldurchgängen der Flanken des Rechtecksignales, also immer an einer repräsentativen und gleichen Stelle des Signales.

Selbstverständlich kann statt einer Rechteckschwingung auch jede andere geeignet aufbereitete Schwingung zur Ermittlung der entsprechenden Zeiten für Teildrehungen des Rades genutzt werden.

Es werden hierbei also die Zeiten für Teildrehungen des Rades über die Zeitdifferenzen zwischen den Nulldurchgängen (Nulldurchgangszeiten) direkt gemessen, d.h. die zeitlichen Abstände $\Delta T_{0(i)}$ (t) zwischen den Flanken einer Rechteckschwingung, wobei $\Delta T_0$ die Nulldurchgangszeit jeweils für die Ermittlungen / Messungen i, i+1, i+2 etc. darstellt.

Im Hinblick auf die Mittelwertbildung gemäß Merkmal b) besteht neben der Mittelung von mehreren aufeinanderfolgend ermittelten oder errechneten Werten einer Radumdrehung eine besonders geeignete Art der Auswertung darin, daß die einzelnen ermittelten Zeiten für die durch die definierten Raddrehwinkel bestimmten Teildrehungen des Rades vor der weiteren Verarbeitung zunächst einer drehsynchronen Mittelung in der Art unterzogen werden, daß über mehrere Radumdrehungen aus den in Bezug auf eine Radumdrehung in gleichen Zeitintervallen bzw. in gleichen Drehwinkelintervallen gemessenen Zeiten ein Mittelwert für mehrere Radumdrehungen gebildet wird, der dann der weiteren Signalverarbeitung zugrunde liegt.

Bei einer solchen drehsynchronen Mittelung werden also die am Rad aufgenommenen und nach einer Verarbeitung bereits als „Zeitwerte" vorliegenden Signale, die in Bezug auf eine Radumdrehung in gleichen Zeitintervallen bzw. in gleichen Drehwinkelintervallen aufgenommen werden, d.h. also die Signale, die etwa durch dieselben Zähne eines Polrades oder Encoders im Verlauf einer einzelnen Radumdrehung erzeugt werden, über mehrere Radumdrehungen gemittelt. Hierdurch läßt sich der Einfluß von Signalrauschen oder von kurzfristig einwirkenden Störgrößen, wie etwa Fahrbahnunebenheiten etc., weiter reduzieren und die Aussagekraft des Signals verstärken, da die dann auffälligen Zeiten für die Teildrehungen mit einer für den Notlaufzustand charakteristischen separat definierten Schwingung des Rades sich von dem in der Regel durch übrige Störgrößen erzeugten Einflüssen auf die Zeiten deutlich unterscheiden.

Eine solche Art der Mittelung eignet sich ebenfalls sowohl für die bereits genannte Auswertung auf der Basis der definierten Zählzeiten (Loop Time) als auch für andere, durch eine Verarbeitung des Drehzahl-Ausgangssignal entstehenden Werte, beispeilsweise für die Frequenzen, die Radgeschwindigkeiten etc., wie nachfolgend noch beschrieben wird.

Insgesamt wird durch diese Ausbildung des Verfahrens einerseits ein überaus präzises und von Aufbau- und Karosserieschwingungen nahezu völlig unbeeinflußtes Auswertungsergebnis ermöglicht, und andererseits steht mit der Ermittlung der Zeiten für die durch die definierten Raddrehwinkel bestimmten Teildrehungen des Rades, bzw. mit der Ermittlung der Nulldurchgangszeiten, eine Eingangs- oder Zwischengröße zur Verfügung, die durch weitere einfache Rechenschritte in Kenntnis der geometrischen Abhängigkeiten am Rad oder Reifen zu Aussagen über die augenblickliche Radgeschwindigkeit oder die Radbeschleunigung weiterverarbeitet oder auch einer Mustererkennung oder einer Frequenzauswertung unterzogen werden kann, wie nachfolgend noch beschrieben wird.

Eine weitere vorteilhafte Ausbildung des Verfahrens besteht darin, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) ein Muster mehrerer aufeinanderfolgender und gem. a) ermittelten und gespeicherten Zeiten mit Hilfe eines Mustererkennungsverfahrens ermittelt wird, und danach

c) das ermittelte Muster mit Referenzmustern- und / oder Schwellenwerten verglichen wird, wobei

d) bei Abweichungen vom Referenzmuster- und / oder von Schwellenwerten ein Warnsignal ausgegeben wird.

Eine solche mit Hilfe einer Mustererkennung arbeitende Ausbildung des Verfahrens erlaubt eine sehr einfache und sichere Erkennung der geometrischen Zuordnung von Veränderungen der ermittelten Nulldurchgangszeiten relativ zum Radstellungswinkel / Raddrehwinkel in Umfangsrichtung, wobei die Veränderungen der ermittelten Nulldurchgangszeiten hier durch das im Notlauf erfolgende Abrollen des Rades auf dem mit Unstetigkeiten versehen Notlaufstützkörper in der bereits gennanten Art erzeugt werden. Bei der Nutzung von Sensoreinrichtungen, die gezahnten Polräder oder ähnliche Elemente als Encoder beinhalten, lassen sich die Nulldurchgangszeiten als Zeitdifferenzen zwischen den Nulldurchgängen hierbei z.B sehr einfach in Abhängigkeit von den Flankennummern der jeweiligen Zähne darstellen.

Zur Frequenzauswertung ist in einer weiteren vorteilhaften Ausbildung des Verfahrens vorgesehen, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) mit Hilfe einer oder mehrerer Recheneinheiten die Frequenzen der gem. a) ermittelten und gespeicherten Zeiten durch Kehrwertbildung errechnet und danach gespeichert werden, wobei anschließend
c) ein Mittelwert der gem. b) ermittelten Frequenzen für eine oder mehrere Radumdrehungen errechnet und gespeichert wird, wonach
d) die Abweichungen der gem. b) ermittelten und gespeicherten Frequenzen von dem gem. c) errechneten Mittelwert ermittelt werden, und danach
e) die ermittelten Abweichungen mit Referenz- und / oder Schwellenwerten verglichen werden, wobei
f) bei Überschreitung der Referenz- und / oder Schwellenwerte ein Warnsignal ausgegeben wird.

Eine Berechnung der Frequenzen durch Kehrwertbildung erfolgt hierbei beispielsweise entsprechend der Formel $f_{(i)}(t) = 0,5 / \Delta T_{0\,(i)}(t)$, wobei f die ermittelte Frequenz und $\Delta T_{0\,(i)}(t)$ die Nulldurchgangszeit jeweils für die Ermittlungen / Messungen i, i+1, i+2 etc. darstellen. Der Faktor 0,5 resultiert in diesem Falle aus den jeweils 2 gemessenen Nulldurchgangszeiten bei einer Schwingungsperiode des sinusförmigen Drehzahl-Ausgangssignales eines Rades.

Auch hier ist gem. Merkmal c) neben der Mittelung von mehreren aufeinanderfolgend ermittelten oder errechneten Werten einer Radumdrehung eine drehsynchrone Mittelung vorgesehen, bei der die am Rad aufgenommenen und nach einer Verarbeitung bereits als „Frequenzwerte" vorliegenden Signale, die in Bezug auf eine Radumdrehung in gleichen Drehwinkelintervallen aufgenommen werden, über meherere Radumdrehungen gemittelt werden. Hierdurch läßt sich, wie bereits dargestellt, der Einfluß von Signalrauschen oder von kurzfristig einwirkenden Störgrößen, wie etwa Fahrbahnunebenheiten etc., weiter reduzieren und die Aussagekraft des Signals verstärken, da die dann auffällige Frequenz der für den Notlaufzustand charakteristischen separat definierten Schwingung, beispielsweise ausgebildet als harmonische Schwingung n-ter Ordnung der Reifenperiode, sich von dem in der Regel durch übrige Störgrößen erzeugten Einflüssen deutlich unterscheidet.

Eine alternative vorteilhafte Ausbildung des Verfahrens im Hinblick auf die Auswertung von Frequenzen besteht darin, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach
b) mit Hilfe einer oder mehrerer Recheneinheiten das Frequenzspektrum der gem. a) ermittelten und gespeicherten Zeiten einer Frequenzanalyse zur Ermittlung der spektralen Leistungsdichte (power spectral density) unterzogen wird, wobei anschließend
c) mit Hilfe einer oder mehrerer Recheneinheiten die ermittelten spektralen Leistungsdichten einer Integration über bestimmte ausgewählte Frequenzintervalle unterzogen und danach gespeichert werden, wonach
d) der Integralwert der ausgewählten Frequenzintervalle verglichen wird mit einem Referenz- oder Schwellenwert, und
e) bei Überschreitung der Referenz- oder Schwellenwerte ein Warnsignal ausgegeben wird.

Eine solche Frequenzanalyse kann beispielsweise in Form einer Fourrieranalyse durchgeführt werden, was sowohl durch eine Recheneinheit als auch - analog - durch eine Schaltungsanordnung erfolgen kann.

Solche Auswertungen bzw. Verfahrensweisen können jeweils allein oder zusätzlich zur Auswertung der Standardabweichungen der Nulldurchgangszeiten durchgeführt werden. Die Auswertungen der Frequenzanalyse und der nachfolgenden Integration über ausgewählte Frequenzintervalle bieten den Vorteil, daß die Aussagesicherheit dadurch weiter gesteigert werden kann, da die dann auffällige Ordnung der Frequenz der für den Notlaufzustand charakteristischen separat definierten Schwingung, beispielweise ausgebildet als harmonische Schwingung n-ter Ordnung der Reifenperiode, auf einfache Weise bestimmt werden kann, da sie sich von dem in der Regel durch übrige Störgrößen erzeugten Einflüssen noch deutlicher unterscheidet.

Eine weitere und in diesem Sinne das Auswerteergebnis verdeutlichende vorteilhafte Weiterbildung des Verfahrens besteht darin, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) mit Hilfe einer oder mehrerer Recheneinheiten aus den gem. a) ermittelten und gespeicherten Zeiten die augenblicklichen Radgeschwindigkeiten errechnet und danach gespeichert werden, wobei anschließend

c) ein Mittelwert der gem. b) ermittelten Radgeschwindigkeiten für eine oder mehrere Radumdrehungen errechnet und gespeichert wird, wonach

d) die Abweichungen der gem. b) ermittelten und gespeicherten Radgeschwindigkeiten von dem gem. c) errechneten Mittelwert ermittelt werden, und danach

e) die ermittelten Abweichungen mit Referenz- und / oder Schwellenwerten verglichen werden, wobei

f) bei Überschreitung der Referenz- und / oder Schwellenwerte ein Warnsignal ausgegeben wird.

Eine Berechnung der Radgeschwindigkeiten erfolgt hierbei beispielsweise entsprechend der Formel $v_{(i)}(t) = 0,02m / \Delta T_{0\,(i)}(t)$, wobei v die Radgeschwindigkeit und $\Delta T_0$ die Nulldurchgangszeit jeweils für die Ermittlungen / Messungen i, i+1, i+2 etc. darstellen. Der Abrollumfang des Rades / Reifens während der Nulldurchgangszeit beträgt in diesem Fall 0,02m. Eine solche Auswertung der Radgeschwindigkeiten unterscheidet im Hinblick auf das Ermittlungsverfahren von der bereits genannten und auf der Auswertung der Zeiten für die Teildrehungen des Rades innerhalb einer „Loop Time", da hier für die Ermittlung bzw. für die Verarbeitung der entsprechenden Zeiten für die durch die definierten Raddrehwinkel bestimmten Teildrehungen die Teildrehung des Rades als solche, d.h. also die Betrachtung eines definierten Raddrehwinkels zugrunde gelegt wird.

Ebenso läßt sich in einer anderen vorteilhaften Ausbildung des Verfahrens das Auswerteergebnis dadurch verdeutlichen, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) mit Hilfe einer oder mehrerer Recheneinheiten aus den gem. a) ermittelten und gespeicherten Zeiten die augenblicklichen Radbeschleunigungen errechnet und danach gespeichert werden, wobei anschließend

c) ein Mittelwert der gem. b) errechneten Radbeschleunigungen für eine oder mehrere Radumdrehungen errechnet und gespeichert wird, wonach

d) die Abweichungen der gem. b) errechneten Radbeschleunigungen von dem gem. c) errechneten Mittelwert oder von einem Nullwert ermittelt werden, und danach

e) die ermittelten Abweichungen mit Referenz- und / oder Schwellenwerten verglichen werden, wobei

f) bei Überschreitung der Referenz- und / oder Schwellenwerte ein Warnsignal ausgegeben wird.

Eine Berechnung der Radbeschleunigungen erfolgt hierbei beispielsweise entsprechend der Formel $a_{(i)}(t) = [v_{(i)} - v_{(i-1)}] / \Delta T_{0\,(i)}(t)$, wobei a die Radbeschleunigung, v die Radgeschwindigkeit und $\Delta T_0$ die Nulldurchgangszeit jeweils für die Ermittlungen / Messungen i -1, i, i+1, i+2 etc. darstellen.

Beide Verfahrensausbildungen, nämlich das der Geschwindigkeitsanalyse und das der Beschleunigungsanalyse können allein oder zusätzlich zur Auswertung der Standardabweichungen der Nulldurchgangszeiten oder der Frequenzen / Frequenzanalyse durchgeführt werden, wobei jede weitere oder zusätzliche und auf der Eingangs- oder Zwischengröße „Nulldurchgangszeiten" beruhende Auswertung Vorteile im Hinblick auf eine gesteigerte Aussagesicherheit bietet. So können beispielsweise beim Abrollen der Räder auf einem sehr unebenen, ggf. stark riffeligem oder mit Bodenwellen oder -vertiefungen versehenem Untergrund durch die verschiedenen Auswerteverfahren die Drehzahl-Ausgangssignale anhand mehrerer Schwellenwerte überprüft werden, wonach mit hoher Sicherheit das Auftreten einer für den Notlauf charakteristischen Schwingung von jeglichen Störgrößen unterschieden werden kann.

Im übrigen können bei der Verwendung von Sensoreinrichtungen, die gezahnte Polräder oder ähnliche Elemente als Encoder beinhalten, alle Auswerteverfahren zusätzlich auch so ausgebildet werden, daß Fehlinterpretationen des Signals durch etwa vorhandene Teilungsfehler der Zahnung oder auch andere Toleranzen in den mechanischen Elementen oder in den elektronischen Bauteilen dadurch vermieden werden, daß die Verarbeitung der Signale ein „Lernen" und eine Selbstkalibrierung des Gesamtsystems beinhaltet. Dies kann z.B. dadurch erfolgen, daß im Normalzustand, d.h. bei der Fahrt ohne Notlauf, regelmäßig auftretende Abweichungen erkannt und deren Signalanteil vom ermittelten Basissignal abgezogen werden.

Besonders geeignet zur Durchführung des Verfahrens zur Ermittlung des Notlaufzustandes eines Luftreifens für Fahrzeugräder ist eine Vorrichtung, die

a) mindestens an jeder Achse, vorzugsweise an jedem Rad angeordnete Sensor-Einrichtungen beinhaltet, die eine permanent vorhandene erste periodische und zur Raddrehzahl proportionale Schwingung als Drehzahl- Ausgangssignal bereitstellen, wobei die Sensoreinrichtungen

b) aktive oder passive Magnetfeldsensoren beinhaltet, die an mit dem Rad drehenden oder an feststehenden Teilen des Fahrzeuges angeordnet sind, und

c) magnetisch aktive oder passive Geber-Einrichtungen beinhaltet, die relativ zu den Magnetfeldsensoren mit der Raddrehzahl rotieren und komplementär zu diesen an mit dem Rad drehenden oder an feststehenden Teilen des Fahrzeuges angeordnet sind und die eine zur Raddrehzahl proportionale periodische Magnetfeldänderung im Detektionsbereich der Magnetfeldsensoren erzeugen, wobei die Vorrichtung weiterhin

d) eine Signalverarbeitungseinrichtung zur Verarbeitung und Auswertung der Drehzahl-Ausgangssignale sowie zur Ausgabe von Steuer- und / oder Warnsignalen aufweist,

e) Übertragungs- und Anzeigeeinrichtungen aufweist zur Übertragung und / oder Anzeige der Drehzahl- Ausgangssignale sowie der Steuer- und / oder Warnsignale,

f) die Vorrichtung eine am Fahrzeugrad angeordnete Notlauf-Einrichtung aufweist, die im Notlaufzustand eine oder mehrere separat definierte, für den Notlaufzustand charakteristische und zur Raddrehzahl proportionale periodische Schwingungen erzeugt und der ersten Schwingung bzw. dem Drehzahl-Ausgangssignal überlagert,

g) die Signalverarbeitungseinrichtung gegebenenfalls Filtereinrichtungen zur Rauschfilterung aufweist und

h) ein oder mehrere Speichereinrichtungen zur Speicherung von Referenz- und / oder Schwellenwerten, sowie

i) eine Vergleichseinrichtung aufweist, die nach einer Verarbeitung die jeweiligen Drehzahl-Ausgangssignale der Achsen oder Räder mit einem oder mehreren Referenz- und / oder Schwellenwerten vergleicht und eine Überlagerung der ersten periodischen Schwingung mit den separaten und für den Notlaufzustand charakteristischen periodischen Schwingungen anhand einer Überschreitung der Referenz- und / oder Schwellenwerte detektiert und zu einem Warnsignal verarbeitet.

Eine solche Vorrichtung, die eine oder mehrere separat definierte und für den Notlaufzustand charakteristische Schwingungen erzeugt und dem Drehzahl-Ausgangssignal überlagert, erlaubt eine sichere Detektion des Notlaufzustandes mit einem relativ einfachen apparativen Aufbau und vermeidet eine Auslösung eines Warnsignales durch die bereits geschilderten aus dem Fahrzustand resultierenden Stör- und Einflußgrößen.

Die Ausbildung einer solchen Vorrichtung besteht in Nutzung der im Stand der Technik bewährten Einrichtungen zunächst darin, daß die Sensor-Einrichtung zur Bereitstellung einer permanent vorhandenen ersten periodischen und zur Raddrehzahl proportionalen Schwingung aktive oder passive Magnetfeldsensoren beinhaltet, die an mit dem Rad drehenden oder an feststehenden Teilen des Fahrzeuges angeordnet sind, wobei die Sensoreinrichtungen weiterhin magnetisch aktive oder passive Geber-Einrichtungen beinhalten, die relativ zu den Magnetfeldsensoren mit der Raddrehzahl rotieren und komplementär zu diesen an mit dem Rad drehenden oder an feststehenden Teilen des Fahrzeuges angeordnet sind, wobei die Geber-Einrichtungen eine zur Raddrehzahl proportionale periodische Magnetfeldänderung im Detektionsbereich der Magnetfeldsensoren erzeugen.

Durch eine solche an sich bekannte Sensoreinrichtung innerhalb der erfindungsgemäßen Vorrichtung vereinfacht sich die Vorrichtungskonstruktion, während gleichzeitig ein sicheres und stabiles Drehzahlausgangssignal in Form einer ersten periodischen Schwingung abrufbar wird.

Hierbei sind die Geber-Einrichtungen in der Regel in Form eines ring- oder scheibenförmigen Encoders ausgebildet, der mit dem Rad rotiert und eine Vielzahl von in Drehrichtung gleichmäßig über den gesamten Umfang des Encoders verteilten permanentmagnetischen Arealen aufweist, wobei die Magentfeldsensoren als aktive oder passive Meßelemente ausgebildet und stationär an feststehenden Teilen des Fahrzeuges und an der Peripherie des Encoders angeordnet sind.

Eine solche Vorrichtungsausbildung, bei dem die Geber-Einrichtungen als Encoder, also etwa als mit dem Rad rotierendes Polrad oder auf seinem Umfang gezähntes metallisches Rad ausgebildet und die Magnetfeldsensoren stationär an feststehenden Teilen angeordnet sind, erlaubt die Verwendung bereits erprobter und bekannter Mittel und beinhaltet eine weitere Reduzierung des apparativen Aufbaus, da keinerlei komplizierte Signalübertragung zwischen drehenden Teilen erforderlich wird.

Eine weitere Ausbildung der Vorrichtung, bei der auf Zusatzeinrichtungen wie Encoder oder Polräder verzichtet und damit u. a. eine Gewichtsersparnis und eine weniger komplexe Meßaufnahme erreicht werden kann, besteht darin, daß die Geber-Einrichtungen als im Reifen - vorzugsweise in der Reifenseitenwand - angeordnete Vielzahl von in Drehrichtung gleichmäßig über den gesamten Umfang des Reifens verteilten permanentmagnetischen Arealen ausgebildet sind, und daß die Magnetfeldsensoren stationär an feststehenden Teilen des Fahrzeugs und an der Peripherie des Reifen angeordnet sind.

Generell ist bei allen Sensoreinrichtungen zu berücksichtigen, daß die schaltungstechnisch und in ihrer konstruktiven Ausführung bzw. Anbindung oftmals einfacher zu realisierenden passiven Meßelemente im Vergleich zu den aktiven Meßelementen ein in ihrer Amplitude, d.h. in ihrer Stärke von der Anregungsfrequenz oder -häufigkeit abhängiges Signal erzeugen, sodaß in der vorliegenden Anwendung die Amplitude des Signales passiver Meßelemente bei hoher Fahrgeschwindigkeit größer und bei langsamer Fahrgeschwindigkeit kleiner werden kann, was gegebenenfalls eine zusätzliche Anpassung der Auswerte-Elektronik und / oder der zur Beurteilung herangezogenen Schwellenwerte erfordert.

Vorteilhafterweise ist die Vorrichtung so ausgebildet, daß die Notlauf-Einrichtung zur Erzeugung einer oder mehrerer, für den Notlaufzustand charakteristischer und zur Raddrehzahl proportionaler periodischer Schwingungen als mindestens ein innerhalb des Reifens angeordneter, vorzugsweise auf der Felge abgestützter Notlaufstützkörper ausgebildet ist, der auf seiner Notlauffläche über den Umfang verteilte definierte Unstetigkeiten aufweist.

Durch eine solche Ausbildung der Vorrichtung lassen sich auf mechanisch einfache Weise ausschließlich im Notlaufzustand auftretende und für diesen repräsentative periodische Schwingungen erzeugen, wobei die separate Definition der Schwingungen leicht über die Formgebung des bzw. der Notlaufstützkörper abgesichert und durchgeführt werden kann.

Vorteilhafterweise sind hierzu die über den Umfang verteilten definierten Unstetigkeiten als Kavitäten oder Einbuchtungen in der Notlauffläche ausgebildet. Eine solche Ausbildung zeigt sich in der Herstellung als besonders einfach, da beispielsweise mit üblichen Walz-, Stanz- oder Prägevorrichtungen die Notlauffläche eines Notlaufstützkörpers in wirtschaftlicher Weise in eine entsprechende Form gebracht werden kann. Darüberhinaus wird durch eine solche Ausbildung der Unstetigkeiten der Reifen im Notlaufzustand, d.h. bei der Anlage von mindestens Teilen der Innenseite der Reifenlauffläche am Notlaufstützkörper, nicht über Gebühr belastet und eine Schädigung des Reifenmateriales weitestgehend vermieden.

In einer vorteilhaften Ausbildung der Vorrichtung sind die Unstetigkeiten als eine erste Anzahl von gleichmäßig über den Umfang verteilten Kavitäten oder Einbuchtungen in der Notlauffläche ausgebildet.

Hierdurch wird eine für den Notlauf typische, harmonische Schwingung erzeugt, die durch den verringerten Abrollradius innerhalb einer Einbuchtung bzw. durch die damit kurzzeitig geänderte Winkelgeschwindigkeit/Drehzahl des Rades bei etwa gleichbleibender Fahrgeschwindigkeit entsteht. Diese überlagerte Schwingung verändert in einer deutlichen Weise das zur Signalverarbeitungseinrichtung geleitete Drehzahlausgangssignal.

Eine solche harmonische Schwingung, beispielweise ausgebildet als durch 13 gleichmäßig über den Umfang der Lauffläche verteilte Einbuchtungen erzeugte harmonische Schwingung 13ter Ordnung der Reifenperiode, erweist sich nämlich im Vergleich zu den üblich einwirkenden Störgrößen und Schwingungsveränderungen als ungewöhnlich und damit deutlich detektierbar.

In besonders vorteilhafter Weise verstärkt wird die Detektierbarkeit und damit die Aussagesicherheit über das Vorliegen eines Notlaufzustandes dadurch, daß eine erste Anzahl von gleichmäßig über den Umfang verteilten Kavitäten oder Einbuchtungen und eine zur ersten Anzahl unterschiedliche zweite Anzahl von gleichmäßig über den Umfang verteilten Kavitäten oder Einbuchtungen in der Notlauffläche ausgebildet sind.

Durch eine solche Ausbildung der Kavitätenanordnung werden zwei harmonische Schwingungen unterschiedlicher Ordnung der Reifenperiode erzeugt, deren gemeinsames Auftreten in der Überlagerung des Drehzahl-Ausgangssignales ein völlig sicheres Indiz für das Vorliegen des Notlaufzustandes darstellen und neben ihrer guten Detektierbarkeit bei der Auswertung der Radgeschwindigkeitsänderungen insbesondere Vorteile bei der Auswertung mit Hilfe einer Frequenzanalyse bereitstellen.

Eine weitere vorteilhafte Ausbildung der Vorrichtung besteht darin, daß die Notlauf-Einrichtung zur Erzeugung einer oder mehrerer, für den Notlaufzustand charakteristischer und zur Raddrehzahl proportionaler periodischer Schwingungen aus einer oder mehreren innerhalb des Reifenkörpers, vorzugsweise im Seitenwandbereich, ausgebildeten und den Reifen bei Luftverlust im Notlauf stabilisierenden, gegebenenfallls aus verschiedenen Schichten und / oder Lagen von Festigkeitsträgern aufgebauten Materialverstärkungen besteht, wobei die Materialverstärkungen über ihren Umfang verteilte definierte Unstetigkeiten aufweisen.

Hierdurch wird es möglich, ein definiertes Notlaufsignal auch dann zu erhalten, wenn keine separaten Notlaufstützkörper innerhalb des Reifens vorgesehen sind, trotzdem aber der Reifen so ausgebildet ist, daß eine Formstabilität im Notlaufzustand erhalten bleibt, wodurch eine begrenzte Fortsetzung der Fahrt ermöglicht werden kann und gleichzeitig ein sicheres Signal zur Erkennung dieses Zustandes detektierbar wird.

Vorteilhafterweise sind die über den Umfang verteilten definierten Unstetigkeiten als Materialanhäufungen oder Materialfehlstellen ausgebildet, die - in ähnlicher Weise wie Einbuchtungen auf einem Notlaufstützkörper - in Form einer erste Anzahl von gleichmäßig über den Umfang verteilten Unstetigkeiten angeordnet sind, wobei gegebenenfalls eine zur ersten Anzahl unterschiedliche zweite Anzahl von Unstetigkeiten gleichmäßig über den Umfang verteilt sind.

Während bei normalem Luftdruck die innerhalb des Reifenkörpers ausgebildeten Materialverstärkungen nicht belastet werden und durch entsprechend symmetrische Anordnungen auch keine Unwucht oder keine Beeinträchtigung des Fahrzustandes im Normalbetrieb verursachen, lassen im Notlaufzustand, d. h. bei abnehmendem Luftdruck und damit eintretender Belastung der entsprechenden Bereiche im Reifenkörper solche Materialanhäufungen oder Materialfehlstellungen eine oder mehrere gut detektierbare Schwingungen entstehen, die eindeutig von der Auswerteelektronik in der Signalverarbeitungseinrichtung ausgewertet werden können.

Der entstehende Nachteil, daß durch eine entsprechende Ausbildung von Bereichen des Reifenkörpers der Reifen selbst schwerer wird, wird zum Teil durch die nicht mehr bestehende Notwendigkeit zur Einfügung eines Notlaufstützkörpers kompensiert sowie durch den weiteren Vorteil, daß auch ein schleichender Luftverlust durch ein allmähliches Auftreten einer durch Materialanhäufungen oder Materialfehlstellen induzierten Schwingung detektiert werden kann und das Signal nicht erst bei einem vollständigen Luftverlust und einer Auflage auf Stützelementen oder Stützkörpern auftritt.

Die Auswertung, bzw. die Detektion der für den Notlauf typischen Schwingung erfolgt dadurch, daß die Vergleichseinrichtung nach einer Verarbeitung der jeweiligen Drehzahl/Ausgangssignale der Achsen oder Räder in der Signalverarbeitungseinrichtung das Drehzahlausgangssignal eines Rades oder einer Achse mit festgelegten Referenzwerten oder Drehzahlausgangssignalen der übrigen Räder oder Achsen als Referenzwerten vergleicht, und bei Überschreitung einer vorgegebenen Differenz zwischen den Drehzahlausgangssignalen ein Warnsignal erzeugt.

Durch letztere Verarbeitung, d. h. durch einen Vergleich der Drehzahl eines Rades mit den übrigen Rädern einer Fahrzeugseite oder auch mit den Rädern der anderen Fahrzeugseite direkt oder diagonal, erreicht man, wie bereits geschildert, eine Verfeinerung und eine Erhöhung der Genauigkeit der Aussage.

Eine im Hinblick auf die Verarbeitung der Signale besonders einfache und mit wenigen Mitteln durchzuführende Auswertung läßt sich in besonders vorteilhafter Weise durch eine Vorrichtung erreichen, bei der die Signalverarbeitungseinrichtung ausgehend von den Signaleingängen für die Drehzahl-Ausgangssignale der einzelnen Räder oder Achsen folgende Einrichtungen aufweist:

a) einen oder mehrere Filter (35-38) für die Drehzahl-Ausgangssignale der einzelnen Räder oder Achsen, vorzugweise Tiefpaß-Filter, zur Filterung der Drehzahl-Ausgangssignale von hochfrequenten Rauschanteilen

b) eine oder mehrere Komparatorschaltungen, insbesondere Rechtecksignale erzeugende Schmitt-Trigger (39-42), für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (43-46) (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine oder mehrere den Zeitkontrolleinrichtungen parallel geschaltete Zähleinrichtungen (43'-46') für die einzelnen Signale aus Einzelimpulsen zur Ermittlung der Anzahl der erhaltenen Einzelimpulse bzw. der gemessenen Zeiten innerhalb einer definierten Zählzeit $T_L$,

e) einen oder mehrere Speicher (47) zur Speicherung der gem. c) ermittelten Zeiten und der gem. d) erhaltenen Anzahlen der Einzelimpulse innerhalb mehrerer aufeinanderfolgender Zählzeiten $T_L$,

f) eine Rechnerschaltung (48) zur Berechnung und Speicherung der mittleren Raddrehgeschwindigkeiten innerhalb der Zählzeiten $T_L$ für eine oder mehrere Radumdrehungen aus den für die Teildrehungen ermittelten Zeiten und deren Anzahlen innerhalb der Zählzeiten $T_L$,

g) eine Vergleichseinrichtung (49), welche die die gemittelten Raddrehgeschwindigkeiten bzw. deren Verlauf mit Referenz- und / oder Schwellenwerten vergleicht und bei Überschreitung der Referenz- und / oder Schwellenwerte ein Warnsignal ausgibt.

Bei einer solchen einfachen Ausbildung der Vorrichtung werden die Radgeschwindigkeiten direkt mit Referenzwerten bzw. untereinander verglichen, was in der Mehrzahl der Anwendungsfälle, insbesondere auch im Hinblick auf eine breite Anwendung in Serienfahrzeugen zur Definition des Notlaufzustandes ausreicht. Weiterhin werden für die Vorrichtung elektronische Standardeinrichtungen nutzbar, wie z.B. Komparatorschaltungen, die üblicherweise als Operationsverstärker ohne Gegenkopplung bekannt sind, wobei solche Standardeinrichtungen die Vorrichtung im Hinblick auf den Fertigungsaufwand und auf die komplexe Schaltung und Verbindung elektronischer Bauteile in wirtschaftlicher Weise in der Großserie herstellen lassen.

Eine weitere vorteilhafte Ausbildung der Vorrichtung besteht darin, daß die Signalverarbeitungseinrichtung ausgehend von den Signaleingängen für die Drehzahl-Ausgangssignale der einzelnen Räder oder Achsen folgende Einrichtungen aufweist:

a) einen oder mehrere Filter (35-38) für die Drehzahl-Ausgangssignale der einzelnen Räder oder Achsen, vorzugweise Tiefpaß-Filter, zur Filterung der Drehzahl-Ausgangssignale von hochfrequenten Rauschanteilen,

b) eine oder mehrere Komparatorschaltungen, insbesondere Rechtecksignale erzeugende Schmitt-Trigger (39-42), für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (50-53) (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) einen oder mehrere Speicher (54), zur Speicherung der Zeiten mehrerer aufeinanderfolgender und gem c) durchgeführter Zeitmessungen ,

e) eine Rechnerschaltung (55) zur Berechnung eines Mittelwertes aus mehreren solchen aufeinanderfolgend ermittelten Zeiten für eine oder mehrere Radumdrehungen und zur Berechnung der Abweichungen der gem. c) ermittelten und gespeicherten Zeiten von dem errechneten Mittelwert ,

f) eine Vergleichseinrichtung (56), welche die ermittelten Abweichungen mit Referenz- und / oder Schwellenwerten vergleicht und bei Überschreitung der Referenz- und / oder Schwellenwerte ein Warnsignal ausgibt.

Wie bereits bei der Beschreibung der zugehörigen Verfahrensschritte ausgeführt, werden hierbei die Zeitdifferenzen, d.h. die zeitlichen Abstände zwischen den Nulldurchgängen (Nulldurchgangszeiten) direkt gemessen, wodurch ein überaus präzises und von Aufbau- und Karosserieschwingungen nahezu völlig unbeeinflußtes Auswertungsergebnis ermöglicht wird.

In einer weiteren vorteilhaften Ausbildung beinhaltet die Signalverarbeitungseinrichtung weitere Einrichtungen, etwa Recheneinrichtungen oder geeignete elektronische Schaltungen, zur Ermittlung bzw. Errechnung von Frequenzen oder zur Frequenzanalyse.

Hierzu ist die Vorrichtung vorteilhafterweise so ausgebildet, daß die Signalverarbeitungseinrichtung ausgehend von den Signaleingängen für die Drehzahl-Ausgangssignale der einzelnen Räder oder Achsen folgende Einrichtungen aufweist:

a) einen oder mehrere Filter (35-38) für die Drehzahl-Ausgangssignale der einzelnen Räder oder Achsen, vorzugweise Tiefpaß-Filter, zur Filterung der Drehzahl-Ausgangssignale von hochfrequenten Rauschanteilen,

b) eine oder mehrere Komparatorschaltungen, insbesondere Rechtecksignale erzeugende Schmitt-Trigger (39-42), für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (50-53) (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine oder mehrere Rechnereinheiten (57-60) zur Berechnung der Frequenzen der gem. c) ermittelten Zeiten durch Kehrwertbildung

e) einen oder mehrere Speicher (61), zur Speicherung der gem. d) berechneten Frequenzen,

f) eine Rechnerschaltung (62) zur Berechnung eines Mittelwertes aus mehreren solchen aufeinanderfolgend berechneten Frequenzen für eine oder mehrere Radumdrehungen und zur Berechnung der Abweichungen der gem. d) ermittelten und gespeicherten Frequenzen von dem errechneten Mittelwert,

g) eine Vergleichseinrichtung (63), welche die ermittelten Abweichungen mit Referenz- und / oder Schwellenwerten vergleicht und bei Überschreitung der Referenz- und / oder Schwellenwerte ein Warnsignal ausgibt.

Eine alternative vorteilhafte Ausbildung der Vorrichtung besteht darin, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter (35-38) für die Drehzahl-Ausgangssignale der einzelnen Räder oder Achsen, vorzugweise Tiefpaß-Filter, zur Filterung der Drehzahl-Ausgangssignale von hochfrequenten Rauschanteilen,

b) eine oder mehrere Komparatorschaltungen, insbesondere Rechtecksignale erzeugende Schmitt-Trigger (39-42), für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (50-53) (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine oder mehrere Rechnereinheiten (64-67) zur Durchführung einer Frequenzanalyse des Frequenzspektrums der gem. c) gemessenen Zeiten in Abhängigkeit von der Zeit (Zeiten-Signal) und zur Ermittlung der spektralen Leistungsdichte (power spectral density),

e) eine oder mehrere Recheneinheiten (68-71) zur Durchführung einer Integration der ermittelten spektralen Leistungsdichten über bestimmte ausgewählte Frequenzintervalle

f) einen oder mehrere Speicher (72), zur Speicherung mehrerer aufeinanderfolgend ermittelter Integralwerte,

g) eine Vergleichseinrichtung (73), welche die ermittelten Integralwerte der ausgewählten Frequenzintervalle mit einem Referenz- und / oder Schwellenwert vergleicht und bei Überschreitung der Referenz- und / oder Schwellenwerte ein Warnsignal ausgibt.

In Verbindung mit der oben bereits genannten Erzeugung einer definierten und auffälligen, harmonischen Schwingung für den Notlaufzustand wird durch eine solche Vorrichtungsausbildung bei der Ermittlung der Frequenzen oder der Frequenzanalyse und dem nachfolgenden Vergleich mit entsprechenden Referenzgrößen eine zusätzliche Sicherheit in der Aussage über und in der Detektion des Notlaufzustandes erreicht.

In einer weiteren vorteilhaften Ausbildung ist die Vorrichtung so ausgebildet, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter für die Drehzahl-Ausgangssignale der einzelnen Räder oder Achsen, vorzugsweise Tiefpaß-Filter, zur Filterung der Drehzahl-Ausgangssignale von hochfrequenten Rauschanteilen,

b) eine oder mehrere Komparatorschaltungen, insbesondere Rechtecksignale erzeugende Schmitt-Trigger, für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (Timer), welche für mehrere auf einanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine Rechnerschaltung zur Berechnung der augenblicklichen Radgeschwindigkeiten entsprechend den gem. c) ermittelten Zeiten,

e) einen oder mehrere Speicher, zur Speicherung der gem. d) berechneten augenblicklichen Radgeschwindigkeiten,

f) eine Rechnerschaltung zur Berechnung eines Mittelwertes der gem. d) berechneten Radgeschwindigkeit für eine oder mehrere Radumdrehungen und zur Berechnung der Abweichungen der gem. d) ermittelten Radgeschwindigkeiten von dem errechneten Mittelwert,

g) eine Vergleichseinrichtung, welche die ermittelten Abweichungen mit Referenz- und / oder Schwellenwerten vergleicht und bei Überschreitung der Referenz- und / oder Schwellenwerte ein Warnsignal ausgibt.

Wie bereits in der vorlaufenden Verfahrensbeschreibung dargestellt, läßt sich mit einer solchen Ausbildung der Vorrichtung - auch zusätzlich zur Auswertung der Standardabweichungen der Nulldurchgangszeiten oder der Frequenzauswertung - auf einfache Weise eine präzise Geschwindigkeitsanalyse durchführen, wobei weitere oder zusätzliche und auf der Eingangs- oder Zwischengröße „Nulldurchgangszeiten" beruhende Auswertungen Vorteile im Hinblick auf eine gesteigerte Aussagesicherheit bieten.

Dies gilt auch für die nachfolgend geschilderte Ausbildung der Vorrichtung zur Durchführung einer Beschleunigungsanalyse, die ebenfalls ggf. angeschlossen werden kann.

Hierzu ist die Vorrichtung vorteilhafterweise so ausgebildet, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter für die Drehzahl-Ausgangssignale der einzelnen Räder oder Achsen, vorzugsweise Tiefpaß-Filter, zur Filterung der Drehzahl-Ausgangssignale von hochfrequenten Rauschanteilen,

b) eine oder mehrere Komparatorschaltungen, insbesondere Rechtecksignale erzeugende Schmitt-Trigger, für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine Rechnerschaltung zur Berechnung der augenblicklichen Radbeschleunigungen entsprechend den gem. c) ermittelten Zeiten,

e) einen oder mehrere Speicher, zur Speicherung der gem. d) berechneten augenblicklichen Radbeschleunigungen,

f) eine Rechnerschaltung zur Berechnung eines Mittelwertes der gem. d) berechneten Radbeschleunigung für eine oder mehrere Radumdrehungen und zur Berechnung der Abweichungen der gem. d) ermittelten Radbeschleunigungen von dem errechneten Mittelwert,

g) eine Vergleichseinrichtung, welche die ermittelten Abweichungen mit Referenz- und / oder Schwellenwerten vergleicht und bei Überschreitung der Referenz- und / oder Schwellenwerte ein Warnsignal ausgibt.

Die Vorrichtung kann dabei immer so ausgebildet sein, daß die Signalverarbeitungseinrichtung eine zugeordnete bzw. nachgeschaltete Recheneinheit aufweist, die über mehrere Radumdrehungen aus den in Bezug auf eine Radumdrehung in gleichen Zeitintervallen bzw. in gleichen Drehwinkelintervallen gemessenen oder berechneten Werten, d.h. Zeiten, Frequenzen, Geschwindigkeiten, Beschleunigungen, zunächst einen Mittelwert errechnet und dann der weiteren Signalverarbeitung zur Verfügung stellt.

Wie bereits anhand der entsprechenden Verfahrensbeschreibung dargelegt, werden hierbei die Signale, die in Bezug auf eine Radumdrehung in gleichen Zeitintervallen bzw. in gleichen Drehwinkelintervallen im Verlauf einer einzelnen Radumdrehung erzeugt werden, über meherere Radumdrehungen gemittelt, wodurch sich der Einfluß von Signalrauschen oder von kurzfristig einwirkenden Störgrößen, wie etwa Fahrbahnunebenheiten etc., weiter reduziert.

Besonders vorteilhaft läßt sich ein Verfahren zur Ermittlung des Notlaufzustandes eines Luftreifens für Fahrzeugräder innerhalb eines Kontrollsystems für luftbereifte Fahrzeugräder verwenden, insbesondere innerhalb eines Anti-Blockier-Systems (ABS), wobei durch das Kontrollsystem mindestens an jeder Achse, vorzugsweise an jedem Rad, eine permanent vorhandene erste periodische und zur Raddrehzahl proportionale Schwingung erzeugt und als Drehzahl-Ausgangssignal einer Signalverarbeitungseinrichtung des Kontrollsystems zugeleitet wird, wobei im Notlaufzustand eine separat definierte, für den Notlaufzustand charakteristische und zur Raddrehzahl proportionale zweite periodische Schwingung der ersten Schwingung bzw. dem Drehzahl-Ausgangssignal überlagert wird, und wobei die Signalverarbeitungseinrichtung des Kontrollsystems eine Überlagerung der ersten periodischen Schwingung mit der separaten zweiten periodischen Schwingung detektiert und zu einem Warnsignal für den Notlauf verarbeitet.

Durch eine solche Verwendung des Verfahrens ergibt sich eine besonders leichte Einbindung und Integration innerhalb bereits ausgereifter und geprüfter Systeme zur Überprüfung der Fahrzeugdaten, so daß lediglich wenige Änderungen in den hierzu nötigen Vorrichtungen und in der dazu erforderlichen Elektronik durchzuführen sind, um die Kapazität eines solchen Kontrollsystems, beispielsweise eines Anti-Blockier-Systems, um die wichtige Aussage zu erweitern, ob ein Notlaufzustand bei einem Rad vorliegt. Die Nutzung der vorhandenen Meßaufnehmer und der Auswerteelektronik erlaubt es dann, eine definierte Aussage über den Notlaufzustand in besonders wirtschaftlicher Weise, auch bei der Großserie zu erreichen.

Anhand eines Ausführungsbeispiels soll die Erfindung näher erläutert werden. Es zeigen:

Fig. 1 eine Prinzipskizze zur Anordnung einer erfindungsgemäßen Vorrichtung innerhalb eines Kraftfahrzeuges

Fig. 2a eine prinzipielle Darstellung einer im Stand der Technik vorhandenen und mit einer aktiven Gebereinrichtung versehenen Sensoreinrichtung für die Raddrehzahl

Fig. 2b eine prinzipielle Darstellung einer im Stand der Technik vorhandenen und mit einer passiven Gebereinrichtung versehenen Sensoreinrichtung für die Raddrehzahl

Fig. 2c eine prinzipielle Darstellung einer im Stand der Technik vorhandenen und mit einer aktiven Gebereinrichtung in Form von in der Reifenseitenwand angeordneten permanentmagnetischen Arealen versehenen Sensoreinrichtung für die Raddrehzahl

Fig. 3 eine Notlauf-Einrichtung zur Erzeugung einer oder mehrerer, für den Notlaufzustand charakteristischer und zur Raddrehzahl proportionaler periodischer Schwingungen in Form eines auf der Felge abgestützten Notlaufstützkörpers

Fig. 4 einen Abschnitt eines Notlaufstützkörper gemäß Fig. 3 mit über den Umfang verteilten Einbuchtungen in der Notlauffläche

Fig. 5a ein Diagramm, welches die Auswertung der verarbeiteten und mit Hilfe der Sensoreinrichtungen über die Raddrehzahl ermittelten Radgeschwindigkeiten der einzelnen Räder innerhalb definierter Zählzeiten (Loops) zeigt

Fig. 5b ein vergrößerte Darstellung (Lupe) des in Fig. 5a markierten Zeitintervalls

Fig. 6a das Zeitverhalten einer ungestörten und mit Hilfe von Sensoreinrichtungen ermittelten und zur Raddrehzahl proportionalen Schwingung (normales Drehzahl-Ausgangssignal) bei konstanter Geschwindigkeit

Fig. 6b das Zeitverhalten einer mit Hilfe von Sensoreinrichtungen ermittelten und zur Raddrehzahl proportionalen Schwingung mit überlagerter Schwingung n-ter Ordnung der Reifenperiode (überlagertes Drehzahl-Ausgangssignale) im Vergleich zum normalen Drehzahl-Ausgangssignal gem. Fig. 6a,

Fig. 7a die über einer Zeitachse aufgetragenen Nulldurchgangszeiten $\Delta T_{0\,(i)}$ (t) (Nulldurchgangszeiten-Signal) des normalen und des überlagerten Drehzahl-Ausgangssignales gem. Fig. 6b, die mit Hilfe einer die Zeitdifferenzen zwischen den Nulldurchgängen der erhaltenen Einzelimpulse messenden Zeitkontrolleinrichtung (Timer) ermittelt wurden,

Fig. 7b   die über einer Zeitachse aufgetragenen und durch Kehrwertbildung aus den Nulldurchgangszeiten gem. Fig. 7a ermittelten Frequenzen,

Fig. 7c   die über einer Zeitachse aufgetragene und aus den Nulldurchgangezeiten gem. Fig. 7a errechnete Radgeschwindigkeit,

Fig. 7d   die über einer Zeitachse aufgetragene und aus den Radgeschwindigkeiten gem. Fig. 7c errechnete Radbeschleunigung,

Fig. 7e   die mit Hilfe einer Frequenzanalyse des Nulldurchgangszeiten-Signales gem. Fig. 7a ermittelte spektrale Leistungsdichte, aufgetragen über der Frequenz,

Fig. 7f   die über einer Zeitachse aufgetragene und aus den Nulldurchgangszeiten errechneten Radgeschwindigkeiten aller vier Räder nach Auswertung realer und am fahrenden Fahrzeug aufgenommener Drehzahl-Ausgangssignale,

Fig. 8   eine schematische Darstellung einer auf der verfahrensgemäßen Auswertung der Anzahlen der erhaltenen Einzelimpulse innerhalb einer definierten Zählzeit $T_L$ (Loop-Time) des normalen bzw. überlagerten Drehzahl-Ausgangssignales beruhenden Signalverarbeitung einer erfindungsgemäßen Vorrichtung als Ablaufplan

Fig. 9   eine schematische Darstellung einer auf der verfahrensgemäßen Auswertung der Nulldurchgangszeiten $\Delta T_{0\ (i)}$ (t) beruhenden Signalverarbeitung einer erfindungsgemäßen Vorrichtung als Ablaufplan

Fig. 10   eine schematische Darstellung der Signalverarbeitung einer erfindungsgemäßen Vorrichtung als Ablaufplan, bei der eine auf der Kehrwertbildung beruhende Berechnung der Frequenzen mehrerer aufeinanderfolgender Messungen der Nulldurchgangszeiten erfolgt

Fig. 11   zeigt eine schematische Darstellung der Signalverarbeitung einer erfindungsgemäßen Vorrichtung als Ablauf plan, bei der mit Hilfe einer Recheneinheit das Frequenzspektrum der Nulldurchgangszeiten in Abhängigkeit von der Zeit (Zeiten-Signal) einer Frequenzanalyse zur Ermittlung der spektralen Leistungsdichte (power spectral density) unterzogen wird

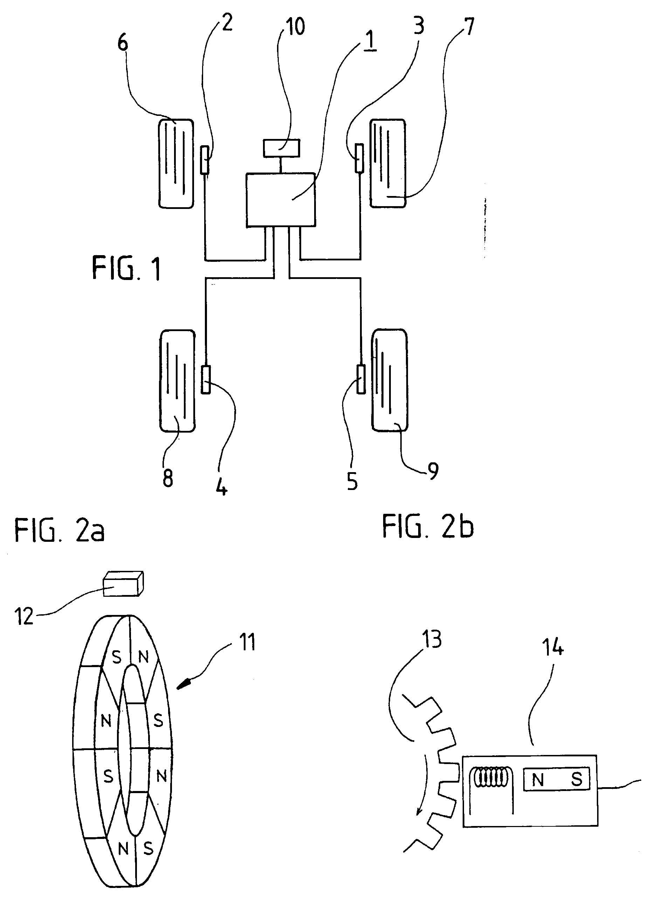

Die Figur 1, die die Anordnung einer erfindungsgemäßen Vorrichtung innerhalb eines Kraftfahrzeuges darstellt, zeigt zunächst eine zentrale Rechner- bzw. Auswerteeinheit 1, die mit Sensoreinrichtungen 2-5 verbunden ist, welche wiederum den einzelnen Rädern 6-9 zugeordnet sind.

Die Sensoreinrichtungen detektieren die Drehzahl-Ausgangssignale der einzelnen Räder und leiten diese an die zentrale Rechnereinheit weiter, welche ausgangsseitig mit einer Anzeige- und Warneinrichtung 10 verbunden ist, etwa mit einer im Sichtfeld des Fahrers am Armaturenbrett angeordneten optischen Warnanzeige.

Die zentrale Rechnereinheit beinhaltet eine Signalverarbeitungseinheit mit allen Einrichtungen zur Auswertung und zum Vergleich der Drehzahlausgangssignale der einzelnen Räder sowie zur Erzeugung eines Warnsignals in der Anzeigeeinrichtung 10.

Die Figur 2a zeigt die prinzipielle Darstellung der in der erfindungsgemäßen Vorrichtung eingesetzten und an sich bekannten Sensoreinrichtung, wobei je eine aktive Gebereinrichtung in Form eines mit den jeweiligen Rad rotierenden Polrades 11 vorhanden ist, welches eine periodische Magnetfeldänderung in dem Magnetfeldsensor 12 erzeugt, die als Drehzahlausgangssignal in Form einer zur Raddrehzahl proportionalen periodischen Schwingung in der zur zentralen Rechnereinheit gehörigen Signalverarbeitungseinrichtung ausgewertet und verarbeitet wird.

Die Figur 2b zeigt eine prinzipielle Darstellung einer alternativen und ebenfalls im Stand der Technik vorhandenen Sensoreinrichtung, wobei hier eine passive Gebereinrichtung in Form eines auf seinem Umfang gezahnten metallischen Rades 13 vorhanden ist, dessen Drehzahl über einen hierfür ausgebildeten Magnetfeldsensor 14 detektiert wird.

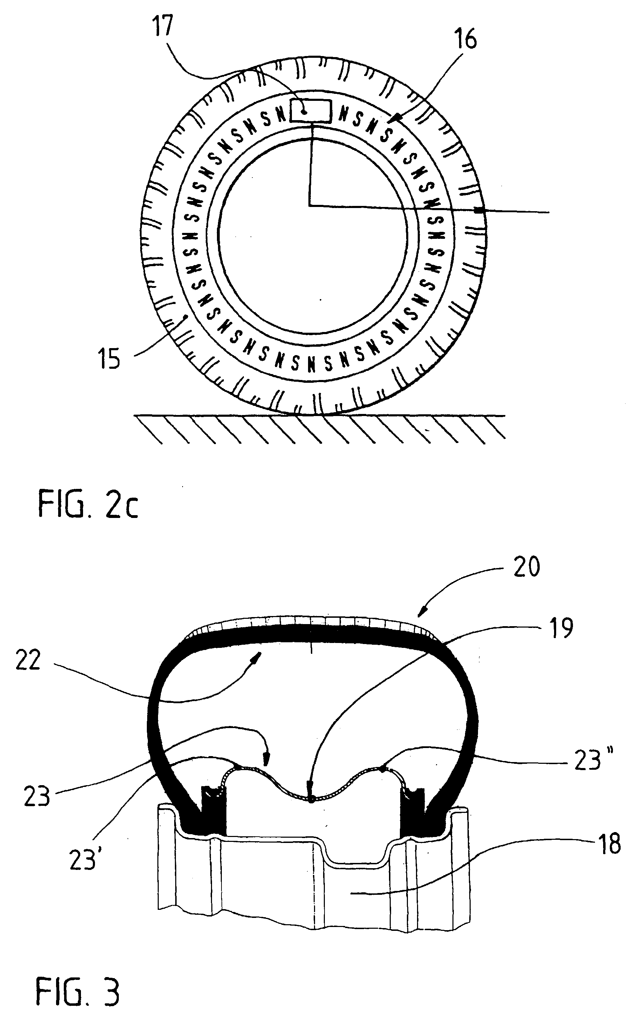

Die Figur 2c zeigt eine weitere bekannte Alternative einer Sensoreinrichtung in prinzipieller Darstellung, wobei wiederum eine aktive Gebereinrichtung in Form von in der Reifenseitenwand 15 angeordneten permanentmagnetischen Arealen 16 angeordnet sind. Die Drehzahl eines solchermaßen ausgerüsteten Reifens wird dann über einen entsprechend ausgebildeten Magnetfeldsensor 17 detektiert.

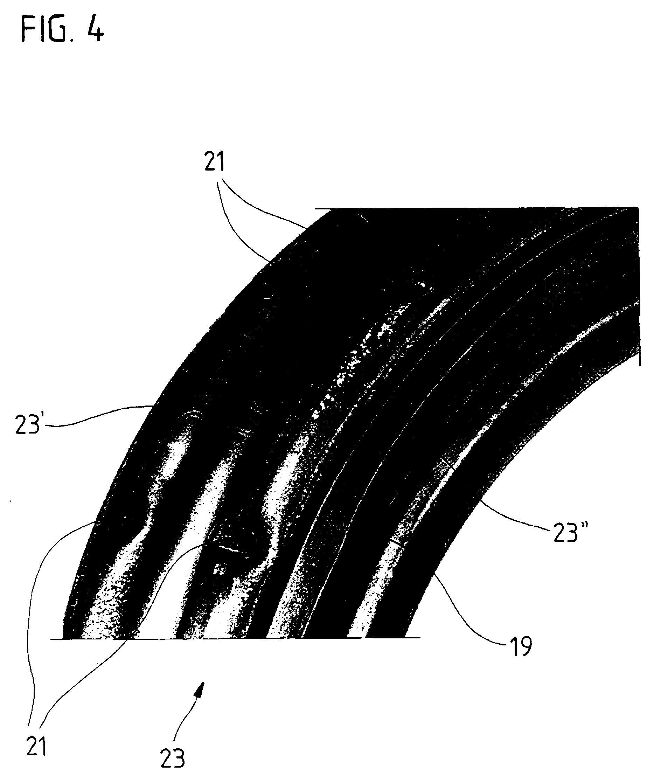

Die Figur 3 zeigt eine in der erfindungsgemäßen Vorrichtung vorgesehene Notlaufeinrichtung zur Erzeugung einer oder mehrerer für den Notlaufzustand charakteristischer und zur Raddrehzahl proportionaler periodischer Schwingungen in Form eines auf einer Felge 18 abgestützten Notlaufstützkörpers 19. Der Notlaufstützkörper befindet sich innerhalb eines hier im Schnitt dargestellten Reifens 20 und ist an seiner Notlauffläche 23 mit über den Umfang verteilten Einbuchtungen 21 versehen, wie in der Figur 4 noch einmal deutlicher dargestellt wird. Es sind hier insgesamt 13 gleiche Einbuchtungen 21 gleichmäßig über den Umfang verteilt, wobei bei der hier eingesetzten Form des Notlaufstützkörpers mit seinen beiden zur Innenseite der Lauffläche des Reifens, d.h. radial nach außen vorspringenden Wölbungen 23' und 23'' die Einbuchtungen 21 symmetrisch jeweils auf beiden Wölbungen 23' und 23'' ausgebildet sind.

Bei einem plötzlichen Luftverlust legt sich die Innenseite 22 der Lauffläche des Reifens an die Außenfläche, d.h. die Notlauffläche 23 des Notlaufstützkörpers an, wodurch ein für den Notlaufzustand ausreichend sicherer Fahrbetrieb ermöglicht und das Abspringen des Reifens von der Felge zuverlässig verhindert wird.

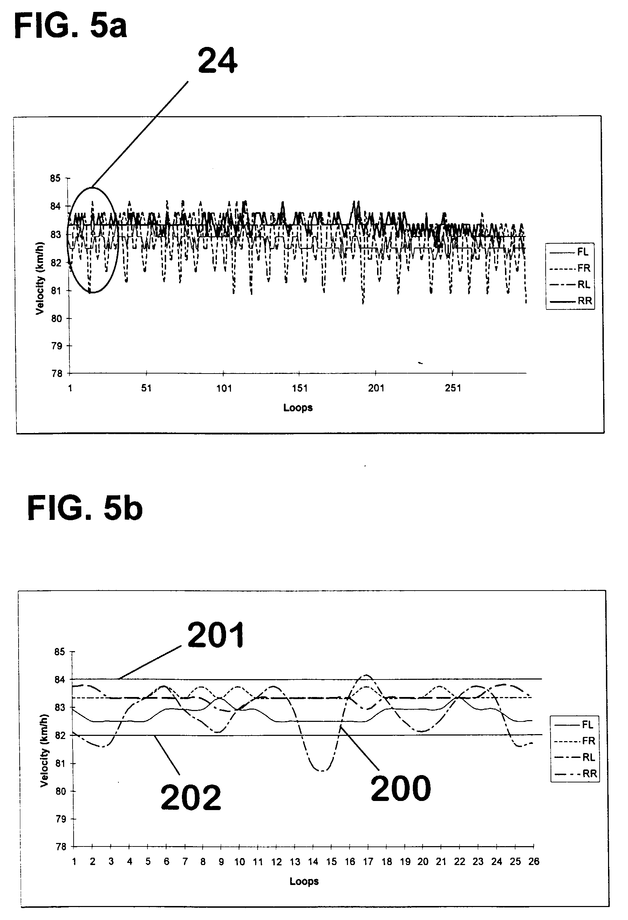

Die Figur 5a zeigt ein Diagramm, welches die Auswertung der in der Signalverarbeitungseinrichtung verarbeiteten und mit Hilfe der Sensoreinrichtungen über die Raddrehzahl ermittelten Radgeschwindigkeiten der einzelnen Räder innerhalb definierter Zählzeiten $T_L$ (Loop-Time) zeigt.

Die definierten Zählzeiten sind hier auf der Abszisse dargestellt, während die Ordinate die Radgeschwindigkeiten der einzelnen Räder beinhaltet. Das Diagramm zeigt dabei synchron die Radgeschwindigkeiten aller vier Räder, nämlich des linken Vorderrades (FL = Front left) des rechten Vorderrades (FR = Front right), des linken Hinterrades (RL = Rear left) und des rechten Hinterrades (RR = Rear right).

Deutlicher erkennbar werden die unterschiedlichen Radgeschwindigkeiten in der Figur 5b, die eine vergrößerte Darstellung (Lupe) des in der Figur 5a markierten Zeitinvalls 24 darstellt.

Die Figuren 5a und 5b zeigen hierbei die verfahrensgemäße Auswertung für ein Fahrzeug, dessen linkes Hinterrad (RL) sich nach einem plötzlichen Druckverlust im Notlaufzustand befindet.

Man erkennt hier bereits bei einer sehr einfachen Geschwindigkeitsauswertung, daß der Geschwindigkeitsverlauf des linken Hinterrades sich deutlich detektierbar von den Geschwindigkeitsverläufen der übrigen Räder unterscheidet, wobei hier etwa 11 Zählzeiten (Loops) eine Radumdrehung repräsentieren. Die den Geschwindigkeitsverlauf des linken Hinterrades repräsentierende Geschwindigkeitskurve 200, deren Charakteristik durch eine separat definierte und zur Raddrehzahl proportionale periodische Schwingung erzeugt wird, welche wiederum durch eine Anzahl von gleichmäßig über die Notlauffläche des im linken Hinterrad befindlichen Notlaufstützkörpers verteilt angeordneten Einbuchtungen angeregt wird, läßt sich leicht und mit herkömmlichen Mitteln durch Referenz- oder Schwellenwerte 201 und 202 für die Radgeschwindigkeit überprüfen und als für einen Notlauf repräsentative Geschwindigkeitskurve detektieren, auch wenn diese durch Karosserie- oder Aufbauschwingungen und Resonanzen beeinflußt ist.

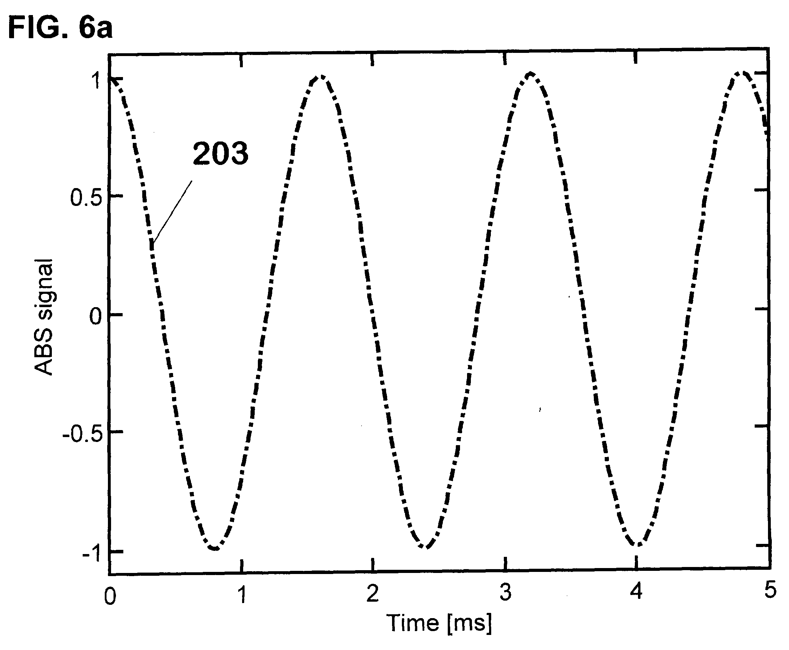

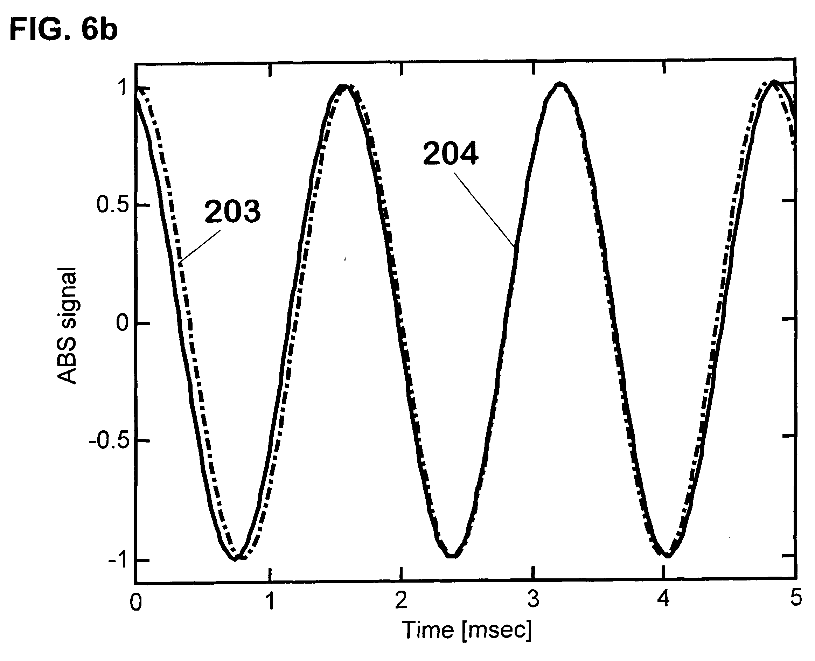

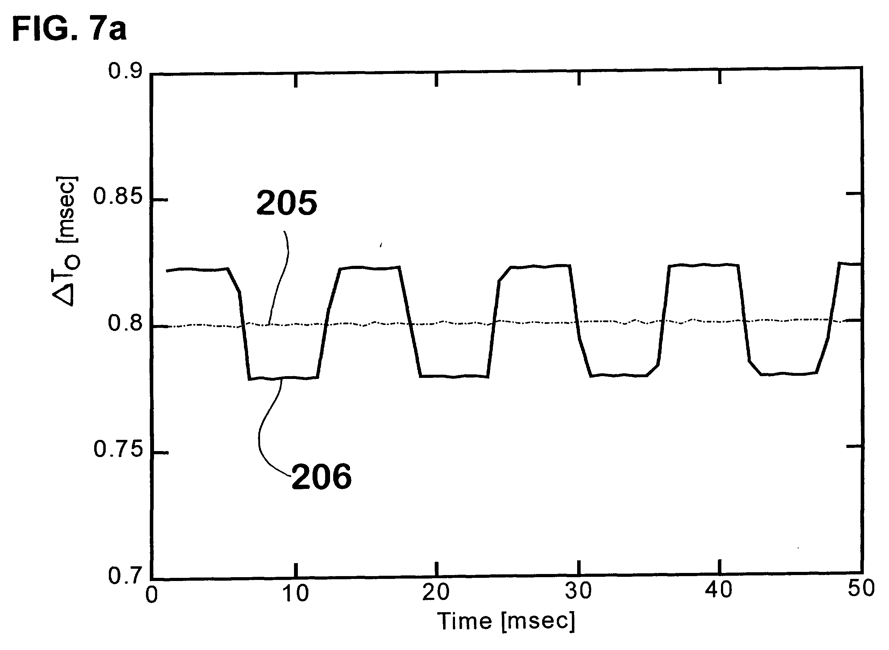

Die Figuren 6a und 6b und 7a - 7e zeigen die deutliche Erkennbarkeit einer dem Drehzahl-Ausgangssignal überlagerten für den Notlaufzustand charakteristischen und separat definierten, zur Raddrehzahl proportionalen Schwingung, die durch Einbuchtungen auf der Notlauffläche bzw. auf dem Abrollumfang eines Notlaufstützkörpers erzeugt wird.

In diesen prinzipiellen und lediglich qualitativen Darstellungen zeigt die Figur 6a zunächst das durch die Kurve 203 dargestellte Zeitverhalten eines normalen Drehzahl-Ausgangssignales, beispielsweise eines ABS-Signales, bei konstanter Geschwindigkeit ohne Notlauf, d.h. im Normalzustand.

Erzeugt man nun mit Hilfe der erfindungsgemäßen Vorrichtung, d.h. mit Einbuchtungen auf der Notlauffläche bzw. auf dem Abrollumfang eines Notlaufstützkörpers eine für den Notlaufzustand charakteristische separat definierte und zur Raddrehzahl proportionale periodische Schwingung n-ter Ordnung der Reifenperiode - hier eine als durch 13 gleichmäßig über den Umfang verteilte Einbuchtungen erzeugte harmonische Schwingung 13. Ordnung der Reifenperiode - und überlagert sie dem Drehzahlausgangssignal, so erhält man das in der Figur 6b durch die Kurve 204 qualitativ gezeigte Zeitverhalten des überlagerten Drehzahl-Ausgangssignales, dargestellt im Vergleich zum nicht überlagerten, d.h. normalen Drehzahl-Ausgangssignal gem. Kurve 203.

Die Figur 7a zeigt die über einer Zeitachse aufgetragenen ermittelten Zeiten für die durch die definierten Raddrehwinkel bestimmten Teildrehungen des Rades in Form eines Nulldurchgangszeiten-Signales $\Delta T_{0\,(i)}$ (t) des normalen und des überlagerten Drehzahl-Ausgangssignales gem. Fig. 6b anhand der Kurven 205 und 206, das mit Hilfe einer die Zeiten / Zeitdifferenzen zwischen den Nulldurchgängen der erhaltenen Einzelimpulse messenden Zeitkontrolleinrichtung (Timer) ermittelt wurde.

Hierbei erkennt man, daß die Nulldurchgangszeiten des normalen Drehzahl-Ausgangssignales gem. Fig. 6b entsprechend der Kurve 205 im wesentlichen konstant bleiben und bei etwa bei 0,8 msec liegen, abgesehen von sich durch leichte Schwankungen zeigenden störenden Einflüsse, wie sie beispielsweise durch Geschwindigkeitsänderungen, Fahrbahnbelag, Signalrauschen etc. entstehen können.

Die Nulldurchgangszeiten des überlagerten Drehzahl-Ausgangssignales gem. Fig. 6b weisen entsprechend der Kurve 206 demgegenüber deutliche merkbare periodische Abweichungen von etwa 0,02 msec auf und schwanken im Hinblick auf ihren Absolutwert zwischen etwa 0,78 und 0,82 msec.

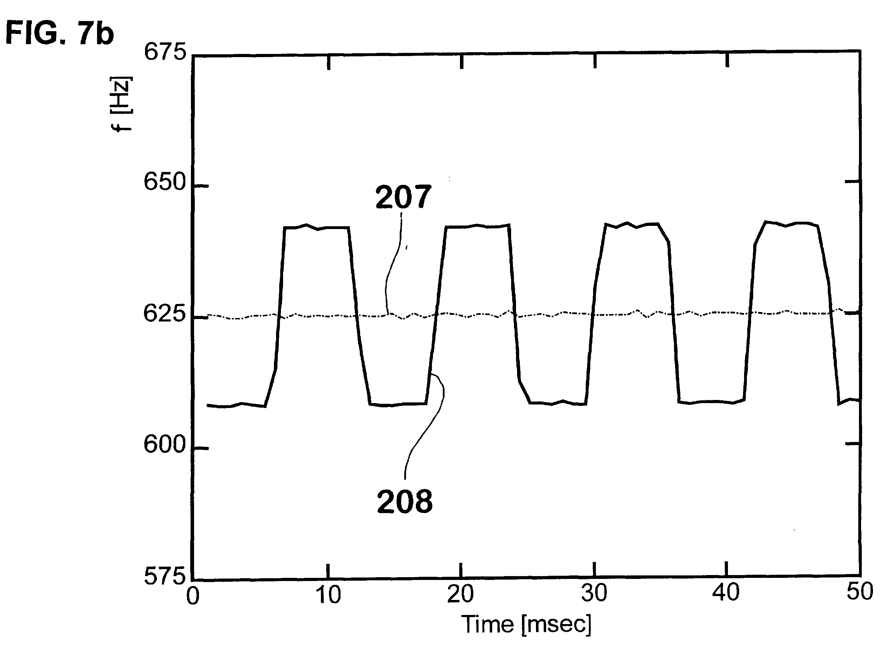

Die Figur 7b zeigt hierzu die über einer Zeitachse aufgetragenen und durch Kehrwertbildung entsprechend der bereits beschriebenen Formel $f_{(i)}(t) = 0,5 / \Delta T_{0\,(i)}(t)$ ermittelten Frequenzen der Nulldurchgangszeiten gem. Fig. 7a. Auch hier wird deutlich, daß die ermittelten Frequenzen der Nulldurchgangszeiten des normalen Drehzahl-Ausgangssignales gern. Fig. 6b entsprechend der Kurve 207 im wesentlichen konstant bleiben und in diesem Fall bei etwa bei 625 Hz liegen, abgesehen wieder von sich lediglich durch leichte Schwankungen zeigenden störenden Einflüssen.

Die entsprechend ermittelten Frequenzen der Nulldurchgangszeiten des überlagerten Drehzahl-Ausgangssignales gem. Fig. 7a weisen entsprechend der Kurve 208 demgegenüber deutliche merkbare und besonders klar detektierbare periodische Abweichungen auf, wobei die Frequenzen im Hinblick auf ihren Absolutwert zwischen etwa 610 Hz und 640 Hz schwanken.

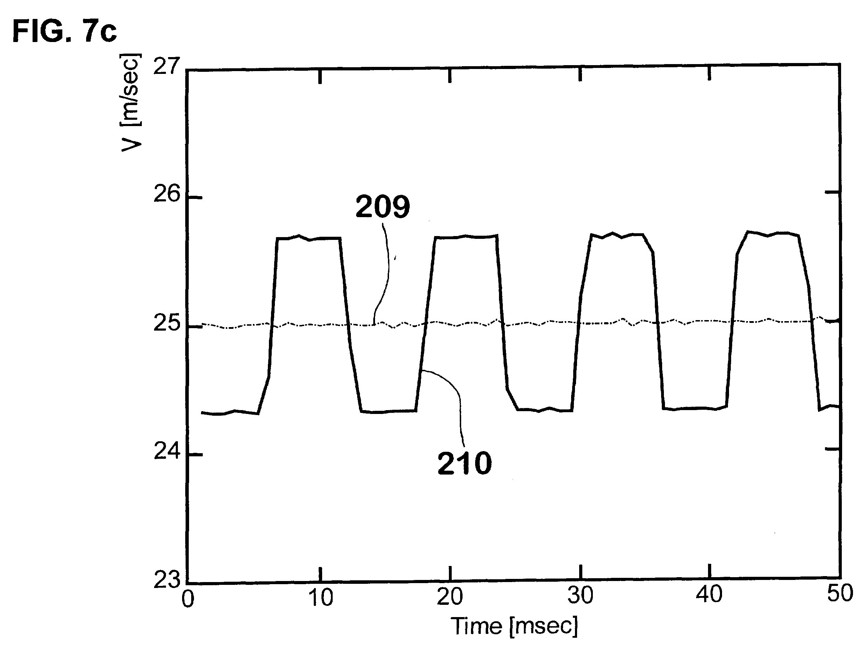

Die Figur 7c zeigt hierzu die über einer Zeitachse aufgetragenen und aus Nulldurchgangszeiten gem. Fig. 7a entsprechend der bereits beschriebenen Formel $v_{(i)}(t) = 0{,}02m / \Delta T_{0(i)}(t)$ ermittelten Radgeschwindigkeiten. Auch hier wird deutlich, daß die aus dem normalen Drehzahl-Ausgangssignales ermittelten Radgeschwindigkeiten entsprechend der Kurve 209 im wesentlichen konstant bleiben und in diesem Fall bei etwa bei 25 m/sec liegen, während die aus dem überlagerten Drehzahl-Ausgangssignal ermittelten Radgeschwindigkeiten entsprechend der Kurve 210 demgegenüber klar detektierbare periodische Abweichungen aufweisen, wobei die Radgeschwindigkeiten im Hinblick auf ihren Absolutwert zwischen etwa 24,2 m/sec und 25,8 m/sec schwanken.

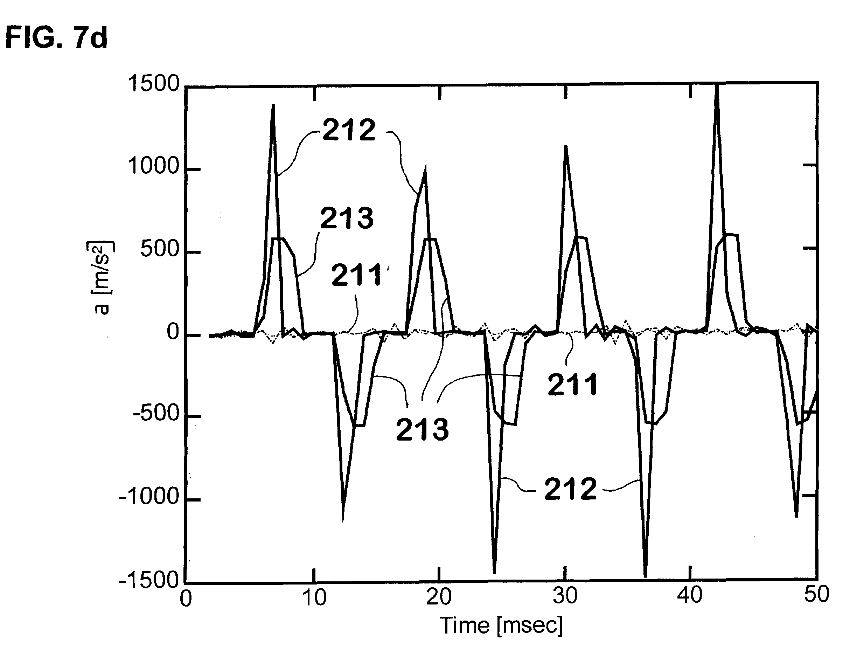

Die Figur 7d zeigt die über einer Zeitachse aufgetragene und aus den Radgeschwindigkeiten gem. Fig. 7c nach der bereits beschriebenen Formel $a_{(i)}(t) = [v_{(i)} - v_{(i-1)}] / \Delta T_{0(i)}(t)$ errechnete Radbeschleunigung. Hier ist erkennbar, daß die aus den Radgeschwindigkeiten des normalen Drehzahl-Ausgangssignales ermittelten Radbeschleunigungen gemäß der Kurve 211 im wesentlichen konstant bleiben, während die aus den Radgeschwindigkeiten des überlagerten Drehzahl-Ausgangssignales ermittelten Radbeschleunigungen entsprechend der Kurve 212 demgegenüber klar detektierbare periodische Abweichungen aufweisen. Die Kurve 213 zeigt zeigt hierbei die durch Mittelwertbildung gefilterten Radbeschleunigungen der Kurve 212. Eine solche Filterung kann gelegentlich sinnvoll werden, da aufgrund des aufrauhenden Charakters einer Differentiation die Beschleunigungskurven oftmals besonders verrauscht sind, sodaß nach der Filterung eine sicherere und leichtere Auswertung erfolgen kann.

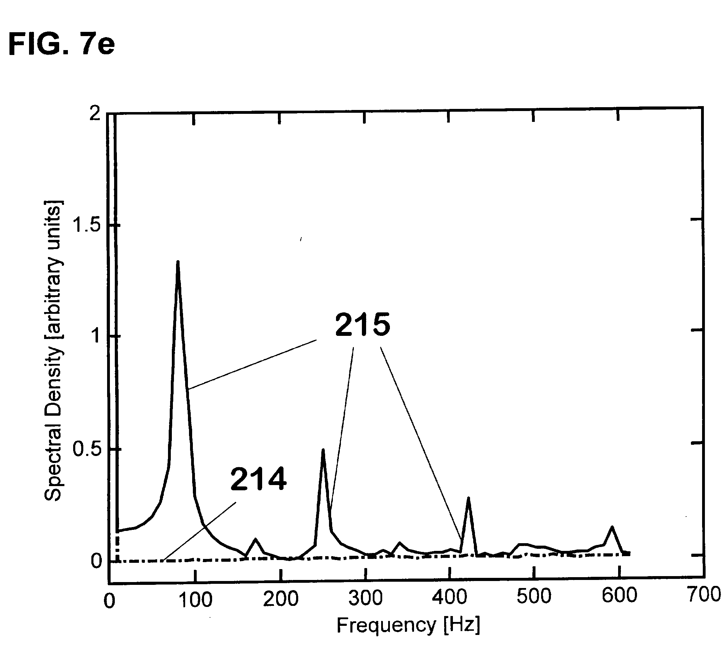

Die Figur 7e zeigt die mit Hilfe einer Frequenzanalyse des Nulldurchgangszeiten-Signales gem. Fig. 7a, hier nämlich mit Hilfe einer schnellen Fourier-Transformation (FFT), ermittelte spektrale Leistungsdichte (spectral density), aufgetragen über der Frequenz. Hierbei erkennt man, daß die aus dem Nulldurchgangszeiten-Signal des überlagerten Drehzahl-Ausgangssignales ermittelte spektrale Leistungsdichte gemäß der Kurve 215 deutliche Spitzen (peaks) zeigt im Vergleich zu der aus dem Nulldurchgangszeiten-Signal des normalen Drehzahl-Ausgangssignales ermittelten spektrale Leistungsdichte gemäß Kurve 214. Die hier gezeigten „peaks" entstehen in Form und und Anordnung durch eine mit Hilfe von 13 gleichmäßig über den Umfang verteilten Einbuchtungen auf einem Notlaufstützkörper erzeugten harmonischen Schwingung 13. Ordnung der Reifenperiode, wobei die zu betrachtenden Frequenzintervalle u.a. abhängig sind von der Ordnung der überlagerten Schwingung und von der Radgeschwindigkeit. Zur weiteren Auswertung bildet man in solchen bestimmten Frequenzbereichen das Integral über die Kurven spektraler Leistungsdichte und vergleicht diese mit Referenz- oder Schwellenwerten oder auch untereinander.

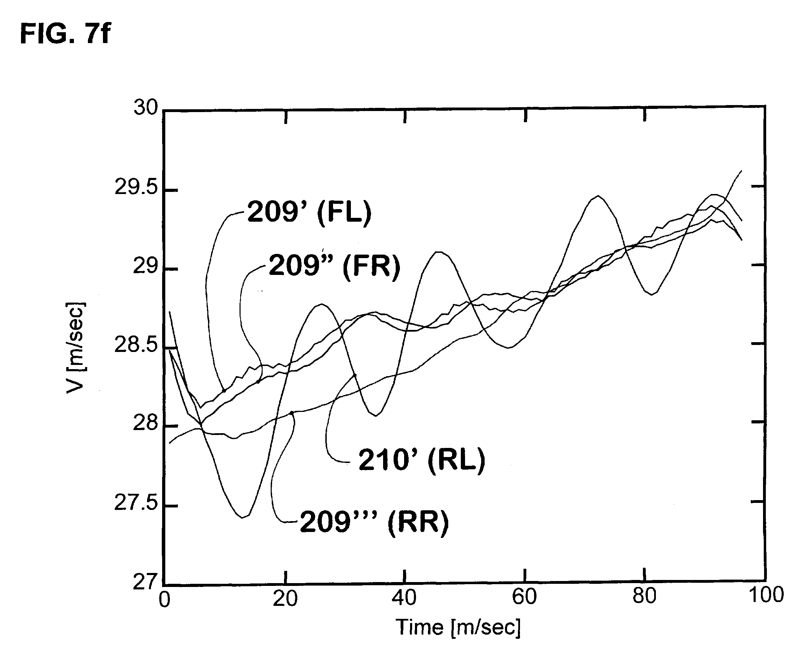

Die Fig. 7f zeigt im Gegensatz zu den obigen qualitativen Darstellungen die Auswertung realer und am fahrenden Fahrzeug aufgenommener Drehzahl-Ausgangssignale, wobei hier die aus Nulldurchgangszeiten entsprechend der bereits beschriebenen Formel $v_{(i)}(t) = 0{,}02m / \Delta T_{0(i)}(t)$ ermittelten Radgeschwindigkeiten aller vier Räder - ähnlich der qualitativen Darstellung für ein Rad in der Fig. 7c - gezeigt sind. Zur besseren Erkennbarkeit und zur Minderung des Einflusses des Signalrauschens wurde hier eine Mittelung über sechs nacheinanderfolgende Berechungen der Nulldurchgangszeiten (sechs Flankensignale) durchgeführt.

Anhand dieser Auswertung wird die durch das erfinderische Verfahren ermöglichte zweifelsfreie Detektion des Notlaufzustandes unter realen Gegebenheiten besonders deutlich. Die aus dem normalen Drehzahl-Ausgangssignales ermittelten Radgeschwindigkeiten - entsprechend den Kurve 209' (FL), 209'' (FR) und 209''' (RR) - bleiben bis auf Störgrößen und Signalrauschen im wesentlichen konstant bzw. annähernd gleichförmig steigend auch bei der hier vorhandenen Geschwindigkeitsserhöhung (Beschleunigung), während die aus dem überlagerten Drehzahl-Ausgangssignal des im Notlauf befindlichen linken Hinterrades (RL) ermittelten Radgeschwindigkeiten entsprechend der Kurve 210' demgegenüber klar detektierbare periodische Abweichungen aufweisen.

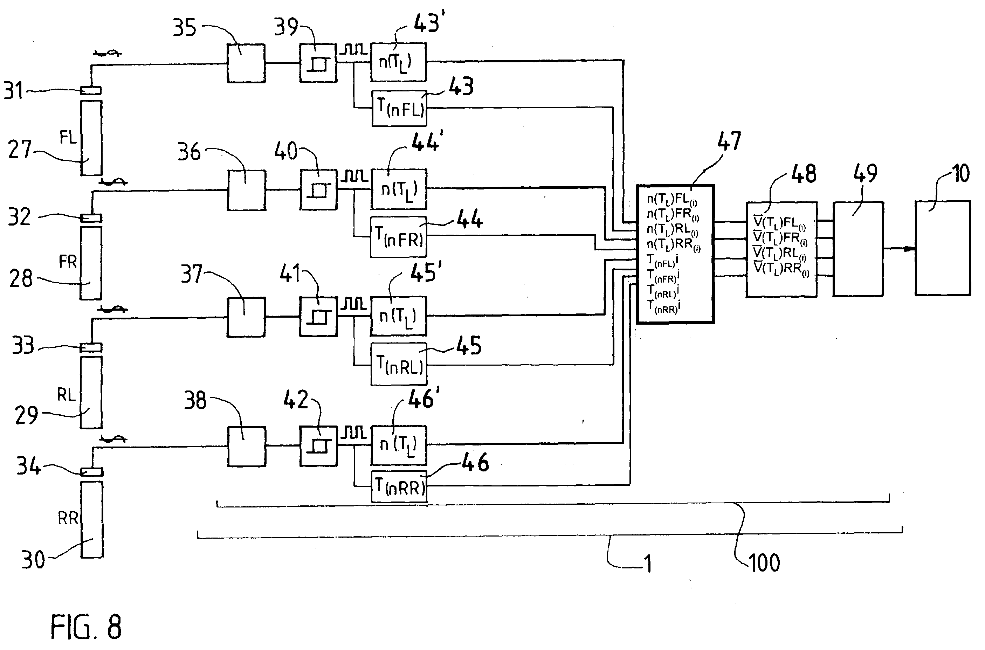

Die Figur 8 zeigt eine schematische Darstellung einer auf der verfahrensgemäßen Auswertung der Anzahlen der erhaltenen Einzelimpulse innerhalb einer definierten Zählzeit $T_L$ (Loop-Time) des normalen bzw. überlagerten Drehzahl-Ausgangssignales beruhenden Signalverarbeitung einer erfindungsgemäßen Vorrichtung als Ablauf plan, wobei bei dem hier gezeigten Verarbeitungsschema eine mittlere Raddrehgeschwindigkeit innerhalb von definierten und mehrere aufeinanderfolgende Raddrehwinkel beinhaltenden Zählzeiten $T_L$ ermittelt wird aus den für die Teildrehungen ermittelten Zeiten und deren Anzahl für eine oder mehrere Radumdrehungen innerhalb der Zählzeiten $T_L$ (Loop-Time).

Schematisch dargestellt sind hier zunächst die an den einzelnen Rädern vorn links (FL), vorn rechts (FR), hinten links (RL) und hinten rechts (RR) angeordnete Sensoreinrichtungen, die aus den als Polräder gemäß der Fig. 2a ausgebildeten aktiven Gebereinrichtungen 27-30 und den jeweils zugeordneten Magnetfeldsensoren 31-34 bestehen.

Die durch die Sensoreinrichtungen detektierten Drehzahl-Ausgangssignale werden dann an die zur zentralen Rechnereinheit 1 gehörigen Signalverarbeitungseinrichtung 100 weitergeleitet und hier mit Hilfe der Tiefpaß-Filter 35-38 von hochfrequenten Rauschanteilen gefiltert, wonach die das Drehzahl-Ausgangssignal repräsentierende Schwingung über Schmitt-Trigger 39-42 in ein Rechtecksignal aus Einzelimpulsen umgewandelt wird.

Die so entstandenen Einzelimpulse aus den Drehzahl-Ausgangssignalen der einzelnen Räder gelangen dann zu den Zeitkontrolleinrichtungen 43 bis 46 (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen (Nulldurchgangszeiten) zwischen zwei auf- bzw. absteigenden und mit den Zeiten für die Teildrehungen korrelierenden Flanken des Rechtecksignales erfolgt.

Parallel hierzu werden die Einzelimpulse des Rechtecksignales den Zähleinrichtungen 43' bis 46' zugeleitet zur Ermittlung der Anzahl n $(T_L)$ der erhaltenen Einzelimpulse bzw. der gemessenen Zeiten innerhalb einer definierten Zählzeit $T_L$

Die Anzahlen der erhaltenen Einzelimpulse mehrerer aufeinander folgender Zählzeiten, hier die Anzahlen n $(T_L)_{FL \ (i)}$, n $(T_L)_{FR \ (i)}$ , n $(T_L)_{RL \ (i)}$ , und n $(T_L)_{RR \ (i)}$ von 10 aufeinander folgenden Zählzeiten (i = 1-10) der jeweils verarbeiteten Drehzahl-Ausgangssignale der einzelnen Räder, sowie auch die ermittelten Zeiten für die durch die definierten Raddrehwinkel bestimmten Teildrehungen des Rades werden dann dem Speicher 47 eingelesen und durch eine nachgeschaltete Rechnerschaltung 48 weiterverarbeitet, in der eine Berechnung und ggf. Speicherung der mittleren Raddrehgeschwindigkeiten V $(T_L)_{FL \ (i)}$, V $(T_L)_{FR \ (i)}$ , V $(T_L)_{RL \ (i)}$ , und V $(T_L)_{RR \ (i)}$ innerhalb der Zählzeiten $T_L$ für eine oder mehrere Radumdrehungen aus den für die Teildrehungen ermittelten Zeiten und deren Anzahlen innerhalb der Zählzeiten $T_L$ erfolgt.

Die gemittelten Raddrehgeschwindigkeiten werden dann in einer Vergleichseinrichtung 49 mit Referenz- und/oder Schwellenwerten verglichen, wobei die Vergleichseinrichtung bei Überschreitung einer vorgegebenen Differenz zu den Referenz- und/oder Schwellenwerten ein Signal an die Anzeigeeinrichtung 10 übermittelt, welche im Sichtbereich des Fahrers im Armaturenbrett angeordnet ist.

Die zentrale Rechnereinheit 1 beinhaltet im weiteren hier nicht näher dargestellte Einrichtungen zur Energieversorgung und -leitung, ggf. zur Signalverstärkung und zur Signalübertragung, Kühleinrichtungen etc., wie sie üblicherweise in solchen auch als Mikro-Rechner bezeichneten Einheiten vorhanden und notwendig sind.

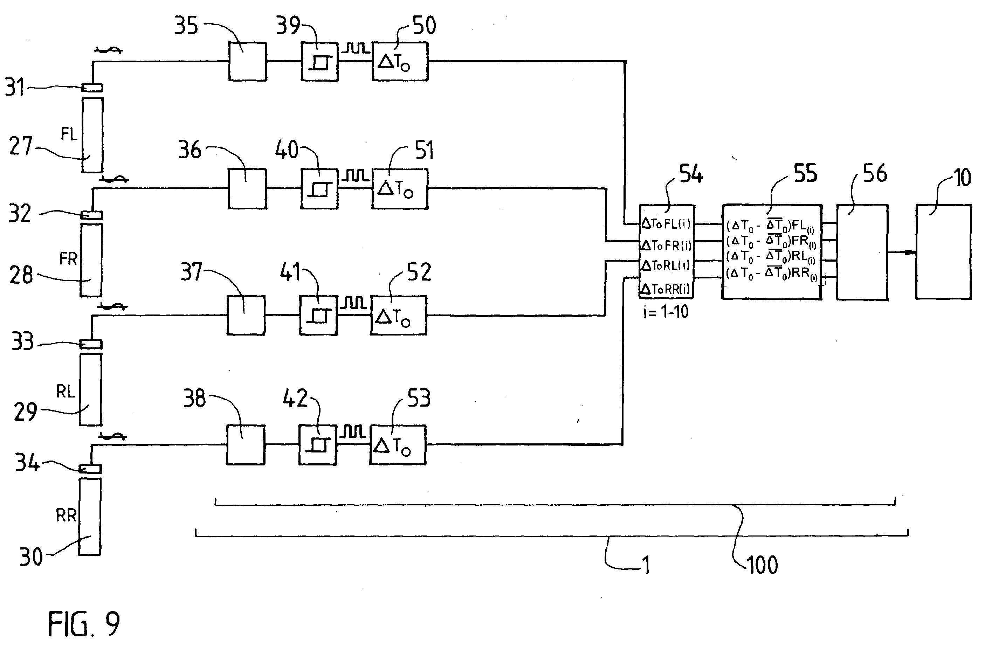

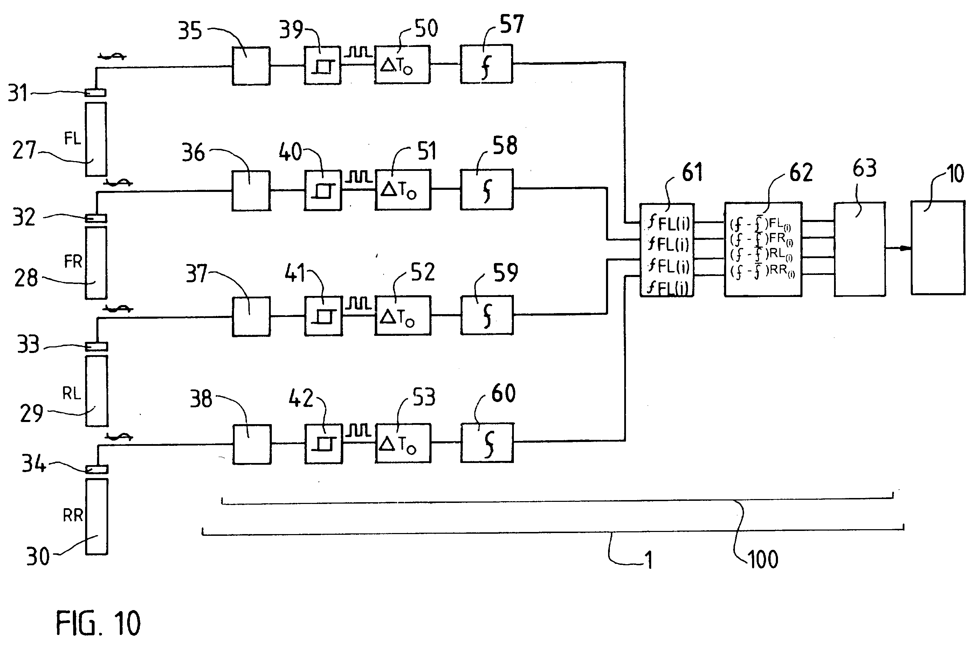

Die Zeitkontrolleinrichtungen 43 bis 46 sowie die Zähleinrichtungen 43' bis 46' könnern hierbei auch, ebenso wie etwa die in den Fig. 9 und 10 dargestellten Zeitkontrolleinrichtungen (Timer), als jeweils eine „Multiplex"-Einrichtung ausgebildet sein, die in kurzen Zeitabständen die einzelnen Drehzahl-Ausgangssignale der Achsen oder Räder zeitlich nacheinander verarbeitet.

Die Figur 9 zeigt eine schematische Darstellung einer auf der verfahrensgemäßen Auswertung der Nulldurchgangszeiten $\Delta T_{0 \ (i)}$ (t) beruhenden Signalverarbeitung einer erfindungsgemäßen Vorrichtung als Ablaufplan, bei der die Zeiten für Teildrehungen des Rades über die Zeitdifferenzen zwischen den Nulldurchgängen (Nulldurchgangszeiten) direkt gemessen werden, d.h. die zeitlichen Abstände $\Delta T_{0 \ (i)}$ (t) zwischen den Flanken einer Rechteckschwingung, wobei $\Delta T_0$ die Nulldurchgangszeit jeweils für die Ermittlungen / Messungen i, i+1, i+2 etc. darstellt.

Schematisch dargestellt sind hier wiederum zunächst die an den einzelnen Rädern vorn links (FL), vorn rechts (FR), hinten links (RL) und hinten rechts (RR) angeordneten Sensoreinrichtungen, die aus den als Polräder gemäß der Fig. 2a ausgebildeten aktiven Gebereinrichtungen 27-30 und den jeweils zugeordneten Magnetfeldsensoren 31-34 bestehen.

Wie bereits bei der in der Figur 8 dargestellten Signalverarbeitung werden auch hier die durch die Sensoreinrichtung detektierten Drehzahl-Ausgangssignale an die zur zentralen Rechnereinheit 1 gehörigen Signalverarbeitungseinrichtung 100 weitergeleitet und hier mit Hilfe der Tiefpaß-Filter 35-38 von hochfrequenten Rauschanteilen gefiltert, wonach die das Drehzahl-Ausgangssignal repräsentierende Schwingung über Schmitt-Trigger 39-42 in ein Rechtecksignal aus Einzelimpulsen umgewandelt wird.

Die jeweils erhaltenen Einzelimpulse aus den Drehzahl-Ausgangssignalen der einzelnen Räder gelangen dann zu den Zeitkontrolleinrichtungen 50 bis 53 (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen $\Delta T_{0 \ (i)}$ (t) zwischen zwei auf- bzw. absteigenden und mit den Zeiten für die Teildrehungen korrelierenden Flanken des Rechtecksignales (Nulldurchgangszeiten) erfolgt.

In einem nachgeschalteten Speicher 54 werden die Nulldurchgangszeiten $\Delta T_{0 \ FL \ (i)}$, $\Delta T_{0 \ FR \ (i)}$, $\Delta T_{0 \ RL \ (i)}$, und $\Delta T_{0 \ RR \ (i)}$ mehrerer aufeinander folgender Zeitmessungen der jeweils verarbeiteten Drehzahl-Ausgangssignale der einzelnen Räder abgelegt, wobei hier jeweils 10 aufeinander folgende Zeitmessungen (i = 10) gespeichert werden.

In einer nachfolgenden Rechnerschaltung 55 werden die Abweichungen der Zeiten für die Teildrehungen des Rades von den hier für eine oder mehrere Radumdrehungen berechneten Mittelwerten der Zeiten für die Teildrehungen des Rades bzw. der Nulldurchgangszeiten mehrerer aufeinander folgender Messungen ermittelt und einer Vergleichseinrichtung 56 zugeleitet, welche die ermittelten Abweichungen mit Referenz- und/oder Schwellenwerten vergleicht und bei Überschreitung einer vorgegebenen Differenz zu den Referenz- und/oder Schwellenwerten ein Warnsignal an die Warneinrichtung 10 abgibt, die wiederum im Blickfeld des Fahrers im Armaturenbrett angeordnet ist.

Die Figur 10 zeigt eine schematische Darstellung der Signalverarbeitung einer erfindungsgemäßen Vorrichtung als Ablauf plan, bei der eine auf der Kehrwertbildung beruhende Berechnung der Frequenzen mehrerer aufeinanderfolgender Messungen der Nulldurchgangszeiten erfolgt.

Wiederum sind hier zunächst schematisch dargestellt die an den einzelnen Rädern vorn links (FL), vorn rechts (FR), hinten links (RL) und hinten rechts (RR) angeordneten Sensoreinrichtungen, die aus den als Polräder gemäß der Fig. 2a ausgebildeten Gebereinrichtungen 27-30 und den jeweils zugeordneten Magnetfeldsensoren 31-34 bestehen.

Die durch die Sensoreinrichtungen detektierten Drehzahl-Ausgangssignale werden dann an die zur zentralen Rechnereinheit 1 gehörigen Signalverarbeitungseinrichtung 100 weitergeleitet und hier mit Hilfe der Tiefpaß-Filter 35-38 von hochfrequenten Rauschanteilen gefiltert, wonach die das Drehzahl-.Ausgangssignal repräsentierende Schwingung über Schmitt-Trigger 39-42 in ein Rechtecksignal aus Einzelimpulsen umgewandelt wird.

Die jeweils erhaltenen Einzelimpulse aus den Drehzahl-Ausgangssignalen der einzelnen Räder gelangen dann zu den Zeitkontrolleinrichtungen 50 bis 53 (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen $\Delta T_{0\,(i)}$ (t) zwischen zwei auf- bzw. absteigenden und mit den Zeiten für die Teildrehungen korrelierenden Flanken des Rechtecksignales (Nulldurchgangszeiten) erfolgt.

Die so erhaltenen Nulldurchgangszeiten werden dann den Recheneinheiten 57 - 60 zugeleitet, in denen eine Berechnung der Frequenzen der Nulldurchgangszeiten durch Kehrwertbildung entsprechend der Formel $f_{(i)}$ (t) = 0,5 / $\Delta T_{0\,(i)}$ (t) erfolgt, wobei $f_{(i)}$ (t) die ermittelte Frequenz und $\Delta T_{0\,(i)}$ (t) die Nulldurchgangszeit jeweils für die Ermittlungen / Messungen i, i+1, i+2 etc. darstellen. Der Faktor 0,5 resultiert in diesem Falle aus den jeweils 2 gemessenen Nulldurchgangszeiten bei einer Schwingungsperiode des hier sinusförmigen Drehzahl-Ausgangssignales eines Rades.

In einem nachgeschalteten Speicher 61 werden die aus den Nulldurchgangszeiten ermittelten Frequenzen $f_{FL\,(i)}$, $f_{FR\,(i)}$, $f_{RL\,(i)}$, und $f_{RR\,(i)}$ mehrerer aufeinander folgender entsprechender Verarbeitungen der jeweiligen Drehzahl-Ausgangssignale der einzelnen Räder abgelegt, wobei hier jeweils 10 aufeinander folgende Frequenzermittlungen (i = 10) gespeichert werden.

In einer nachfolgenden Rechnerschaltung 62 werden die Abweichungen der Frequenzen von den hier für eine oder mehrerere Radumdrehungen berechneten Mittelwerten der Frequenzen für mehrere aufeinander folgende Frequenzermittlungen berechnet und einer Vergleichseinrichtung 63 zugeleitet, welche die ermittelten Abweichungen mit Referenz- und/oder Schwellenwerten vergleicht und bei Überschreitung einer vorgegebenen Differenz zu den Referenz- und/oder Schwellenwerten ein Warnsignal an die im Blickfeld des Fahrers angeordnete Warneinrichtung 10 abgibt.

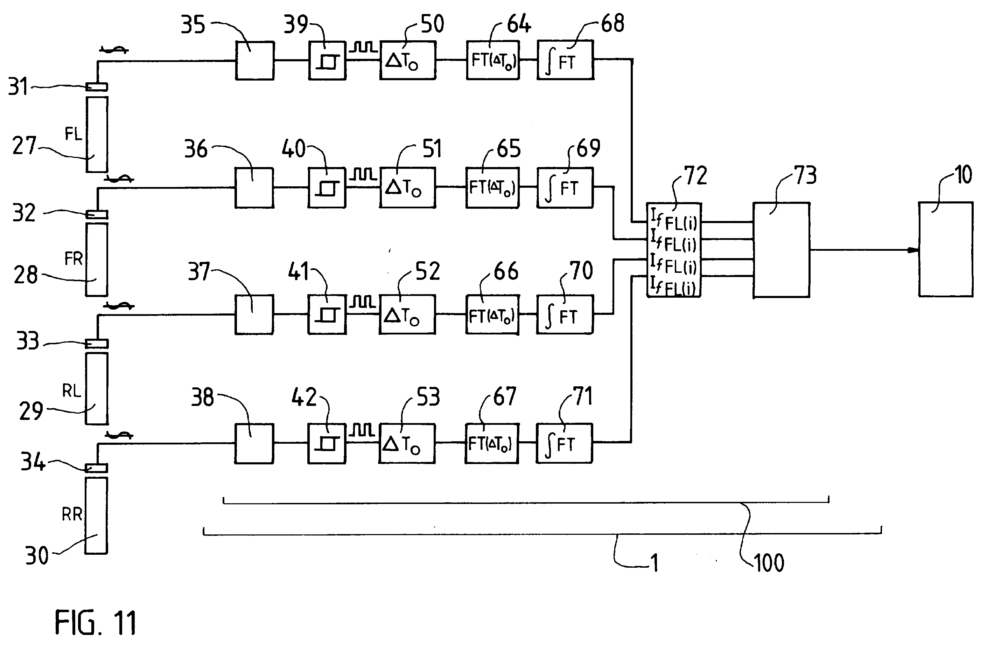

Die Figur 11 zeigt eine schematische Darstellung der Signalverarbeitung einer erfindungsgemäßen Vorrichtung als Ablauf plan, bei der mit Hilfe einer Recheneinheit das Frequenzspektrum der Nulldurchgangszeiten in Abhängigkeit von der Zeit (Nulldurchgangszeiten-Signal) einer Frequenzanalyse zur Ermittlung der spektralen Leistungsdichte (power spectral density) unterzogen wird.

Wiederum sind hier zunächst schematisch dargestellt die an den einzelnen Rädern vorn links (FL), vorn rechts (FR), hinten links (RL) und hinten rechts (RR) angeordneten Sensoreinrichtungen, die aus den als Polräder gemäß der Fig. 2a ausgebildeten Gebereinrichtungen 27-30 und den jeweils zugeordneten Magnetfeldsensoren 31-34 bestehen.

Die durch die Sensoreinrichtungen detektierten Drehzahl-Ausgangssignale werden dann an die zur zentralen Rechnereinheit 1 gehörigen Signalverarbeitungseinrichtung 100 weitergeleitet und hier mit Hilfe der Tiefpaß-Filter 35-38 von hochfrequenten Rauschanteilen gefiltert, wonach die das Drehzahl-.Ausgangssignal repräsentierende Schwingung über Schmitt-Trigger 39-42 in ein Rechtecksignal aus Einzelimpulsen umgewandelt wird.

Die jeweils erhaltenen Einzelimpulse aus den Drehzahl-Ausgangssignalen der einzelnen Räder gelangen dann zu den Zeitkontrolleinrichtungen 50 bis 53 (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzan $\Delta T_{0\,(i)}$ (t) zwischen zwei auf- bzw. absteigenden und mit den Zeiten für die Teildrehungen korrelierenden Flanken des Rechtecksignales (Nulldurchgangszeiten) erfolgt.

Das Frequenzspektrum des so erhaltenen Nulldurchgangszeiten-Signales wird dann den Recheneinheiten 64 - 67 zugeleitet, in denen eine Frequenzanalyse FT ($\Delta T_0$) in Form einer Fourier-Transformation zur Ermittlung der spektralen Leistungsdichte durchgeführt wird.

Nachfolgend werden die spektralen Leistungsdichten der entsprechend verarbeiteten jeweiligen Drehzahl-Ausgangssignale der einzelnen Räder in den Recheneinheiten 68 - 71 einer Integration über bestimmte Frequenzbereiche unterzogen, sodaß sich für das Integral ein Wert des Ausdrucks

$$\int FT(\Delta T_0)\, df \equiv I_{f\,(i)}$$

ergibt. Die so im Hinblick auf die jeweiligen Drehzahl-Ausgangssignale der einzelnen Räder ermittelten Integralwerte $I_{f\,FL\,(i)}$, $I_{f\,FR\,(i)}$, $I_{f\,RL\,(i)}$, und $I_{f\,RR\,(i)}$ werden dann zunächst einem Speicher 72 und dann einer Vergleichseinrichtung 73 zugeleitet, welche die ermittelten Integralwerte mit Referenz- und/oder Schwellenwerten vergleicht und bei Überschreitung einer vorgegebenen Differenz zu den Referenz- und/oder Schwellenwerten ein Warnsignal an die im Blickfeld des Fahrers angeordnete Warneinrichtung 10 abgibt.

***Bezugszeichenliste***

| | |
|---|---|
| 1 | zentrale Recheneinheit |
| 2-5 | Sensoreinrichtung |
| 6-9 | Rad |
| 10 | Anzeigeeinrichtung |
| 11 | Polrad |
| 12 | Magnetfeldsensor |
| 13 | gezahntes Rad / Gebereinrichtung |
| 14 | Magnetfeldsensor |
| 15 | Reifenseitenwand |
| 16 | permanentmagnetische Areale |
| 17 | Magnetfeldsensor |
| 18 | Felge |
| 19 | Notlaufstützkörper |
| 20 | Reifen |
| 21 | Einbuchtung |
| 22 | Innenseite der Lauffläche des Reifens |
| 23 | Notlauffläche des Notlaufstützkörpers |
| 24 | Zeitintervall |
| 25 | --- |
| 26 | --- |
| 27-30 | aktive Gebereinrichtung |
| 31-34 | Magnetfeldsensor |
| 35-38 | Tiefpaß-Filter |
| 39-42 | Schmitt-Trigger |
| 43-46 | Zeitkontrolleinrichtung |
| 43'-46' | Zähleinrichtung |
| 47 | Speicher |
| 48 | Rechnerschaltung |
| 49 | Vergleichseinrichtung |
| 50-53 | Zeitkontrolleinrichtung (Timer) |
| 54 | Speicher |
| 55 | Rechnerschaltung |
| 56 | Vergleichseinrichtung |
| 57-60 | Recheneinheit zur Frequenzbestimmung mittels Kehrwertbildung |
| 61 | Speicher |
| 62 | Rechnerschaltung |
| 63 | Vergleichseinrichtung |
| 64-67 | Recheneinheit zur Durchführung einer Fourrier-Transformation |
| 68-71 | Recheneinheit zur Durchführung einer Integration |
| 72 | Speicher |
| 73 | Vergleichseinrichtung |
| 100 | Signalverarbeitungseinrichtung |
| 200 | Geschwindigkeitskurve |
| 201, 202 | Referenz- oder Schwellenwert |
| 203 | Zeitverhalten des normalen Drehzahl-Ausgangssignales |
| 204 | Zeitverhalten des überlagerten Drehzahl-Ausgangssignales |
| 205 | Nulldurchgangszeiten-Signal des normalen Drehzahl-Ausgangssignales |
| 206 | Nulldurchgangszeiten-Signal des überlagerten Drehzahl-Ausgangssignales |
| 207 | Frequenzen der Nulldurchgangszeiten des normalen Drehzahl-Ausgangssignales |
| 208 | Frequenzen der Nulldurchgangszeiten des überlagerten Drehzahl-Ausgangssignales |
| 209 | aus dem normalen Drehzahl-Ausgangssignal ermittelte Radgeschwindigkeiten |
| 209' - 209''' | aus dem normalen Drehzahl-Ausgangssignal bei realem Fahrbetrieb ermittelte Radgeschwindigkeiten |
| 210 | aus dem überlagerten Drehzahl-Ausgangssignal ermittelte Radgeschwindigkeiten |
| 210' | aus dem überlagerten Drehzahl-Ausgangssignal bei realem Fahrbetrieb ermittelte Radgeschwindigkeiten |
| 211 | aus den Radgeschwindigkeiten des normalen Drehzahl-Ausgangssignales ermittelte Radbeschleunigungen |
| 212 | aus den Radgeschwindigkeiten des überlagerten Drehzahl-Ausgangssignales ermittelte Radbeschleunigungen |
| 213 | durch Mittelwertbildung gefilterte Radbeschleunigungen |
| 214 | spektrale Leistungsdichte (normales Drehzahl-Ausgangssignal) |
| 215 | spektrale Leistungsdichte (überlagertes Drehzahl-Ausgangssignal) |

**Patentansprüche**

1.  Verfahren zur Ermittlung des Notlaufzustandes eines Luftreifens für Kraftfahrzeugräder, bei dem mindestens an jeder Achse, vorzugsweise an jedem Rad, eine permanent vorhandene erste periodische und zur Raddrehzahl proportionale Schwingung erzeugt und als Drehzahl- Ausgangs-

signal einer Signalverarbeitungseinrichtung zugeleitet wird, und bei dem im Notlaufzustand eine oder mehrere separat definierte, für den Notlaufzustand charakteristische und zur Raddrehzahl proportionale periodische Schwingungen der ersten Schwingung bzw. dem Drehzahl-Ausgangssignal überlagert werden, und bei dem die Signalverarbeitungseinrichtung eine Überlagerung der ersten periodischen Schwingung mit der/den separat definierten und für den Notlaufzustand charakteristischen periodischen Schwingung(en) detektiert und zu einem Warnsignal verarbeitet.

2. Verfahren zur Ermittlung des Notlaufzustandes eines Luftreifens für Kraftfahrzeugräder nach Anspruch 1, bei dem mindestens an jeder Achse, vorzugsweise an jedem Rad, eine permanent vorhandene erste periodische und zur Raddrehzahl proportionale Schwingung erzeugt und als Drehzahl- Ausgangssignal einer Signalverarbeitungseinrichtung zugeleitet wird, wobei das Drehzahl-Ausgangssignal durch aktive oder passive Magnetfeldsensoren bereitgestellt wird, indem relativ zu letzteren rotierende magnetisch aktive oder passive und an mit dem Rad drehenden oder an feststehenden Teilen des Fahrzeuges befindliche Einrichtungen, vorzugsweise Encoder, eine zur Raddrehzahl proportionale periodische Magnetfeldänderung erzeugen, und bei dem im Notlaufzustand eine oder mehrere separat definierte, für den Notlaufzustand charakteristische und zur Raddrehzahl proportionale periodische Schwingungen der ersten Schwingung bzw. dem Drehzahl-Ausgangssignal überlagert werden, und bei dem die Signalverarbeitungseinrichtung eine Überlagerung der ersten periodischen Schwingung mit der/den separat definierten und für den Notlaufzustand charakteristischen periodischen Schwingung(en) detektiert und zu einem Warnsignal verarbeitet.

3. Verfahren nach Anspruch 2, dadurch gekennzeichnet, daß die separat definierten für den Notlaufzustand charakteristischen und zur Raddrehzahl proportionalen periodischen Schwingungen mit einer am Fahrzeugrad vorgesehenen Notlaufeinrichtung zur Fortsetzung der Fahrt im beschädigten oder luftlosen Zustand der Reifen erzeugt werden.

4. Verfahren nach Anspruch 3, dadurch gekennzeichnet, daß die für den Notlaufzustand charakteristischen, separat definierten und zur Raddrehzahl proportionalen periodischen Schwingungen mit einem innerhalb des Luftreifens auf der Felge angeordneten und mit Unstetigkeiten, vorzugsweise ausgebildet als Kavitäten oder Einbuchtungen, an seinem Abrollumfang versehenen Notlaufstützkörper erzeugt werden.

5. Verfahren nach Anspruch 3, dadurch gekennzeichnet, daß die für den Notlaufzustand charakteristischen und zur Raddrehzahl proportionalen periodischen Schwingungen mit einer oder mehreren innerhalb des Reifenkörpers, vorzugsweise im Seitenwandbereich, ausgebildeten und den Reifen bei Luftverlust im Notlauf stabilisierenden, gegebenenfallls aus verschiedenen Schichten und / oder Lagen von Festigkeitsträgern aufgebauten Materialverstärkungen erzeugt werden, wobei die Materialverstärkungen über ihren Umfang verteilte definierte Unstetigkeiten, vorzugsweise ausgebildet als Materialanhäufungen oder Materialfehlstellen, aufweisen.

6. Verfahren nach Anspruch 4 oder 5, dadurch gekennzeichnet, daß die für den Notlaufzustand charakteristischen und zur Raddrehzahl proportionalen periodischen Schwingungen durch eine erste Anzahl von gleichmäßig über den Umfang verteilten Unstetigkeiten erzeugt werden.

7. Verfahren nach Anspruch 4 oder 5, dadurch gekennzeichnet, daß die für den Notlaufzustand charakteristischen und zur Raddrehzahl proportionalen periodischen Schwingungen durch eine erste Anzahl von gleichmäßig über den Umfang verteilten Unstetigkeiten und eine zur ersten Anzahl unterschiedliche zweite Anzahl von gleichmäßig über den Umfang verteilten Unstetigkeiten erzeugt werden.

8. Verfahren nach Anspruch 1 bis 7, dadurch gekennzeichnet, daß das Drehzahl-Ausgangssignal nach einer Verarbeitung in der Signalverarbeitungseinrichtung mit einem oder mehreren Referenz- und / oder Schwellenwerten verglichen und die Überlagerung mit den separaten und für den Notlaufzustand charakteristischen periodischen Schwingungen anhand einer Überschreitung der Referenz- und / oder Schwellenwerte erkannt und zu einem Warnsignal verarbeitet wird.

9. Verfahren nach Anspruch 8, dadurch gekennzeichnet, daß das Drehzahl-Ausgangssignal eines Rades oder einer Achse nach einer Verarbeitung in der Signalverarbeitungseinrichtung mit Drehzahl-Ausgangssignalen der übrigen Räder oder Achsen als Referenzwerten verglichen wird.

10. Verfahren nach Anspruch 8 oder 9, dadurch gekennzeichnet, daß in der Signalverarbeitungseinrichtung aus dem Drehzahl-Ausgangssignal die Radgeschwindigkeit für vorgegebene Zeitintervalle errechnet und mit einem oder mehreren Referenz-Radgeschwindigkeiten und / oder Schwellenwerten verglichen wird, wobei ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) innerhalb von definierten und mehrere aufeinanderfolgende Raddrehwinkel beinhaltenden Zählzeiten $T_L$ aus den für die Teildrehungen ermittelten Zeiten und deren Anzahl eine mittlere Raddrehgeschwindigkeit für eine oder mehrere Radumdrehungen innerhalb der Zählzeiten errechnet und gespeichert wird, wonach

c) die gemittelten Raddrehgeschwindigkeiten bzw. deren Verlauf mit Referenz- und / oder Schwellenwerten verglichen werden, wobei

d) bei Überschreitung der Referenz- und / oder Schwellenwerte ein Warnsignal ausgegeben wird.

**11.** Verfahren nach Anspruch 8 oder 9, dadurch gekennzeichnet, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) ein Mittelwert aus mehreren solchen aufeinanderfolgend ermittelten Zeiten für eine oder mehrere Radumdrehungen errechnet und gespeichert wird, wonach

c) die Abweichungen der gem. a) ermittelten und gespeicherten Zeiten von dem gem. b) errechneten Mittelwert ermittelt werden, und danach

d) die ermittelten Abweichungen mit Referenz- und / oder Schwellenwerten verglichen werden, wobei

e) bei Überschreitung der Referenz- und / oder Schwellenwerte ein Warnsignal ausgegeben wird.

**12.** Verfahren nach Anspruch 8 oder 9, dadurch gekennzeichnet, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) ein Muster mehrerer aufeinanderfolgender und gem. a) ermittelten und gespeicherten Zeiten mit Hilfe eines Mustererkennungsverfahrens ermittelt wird, und danach

c) das ermittelte Muster mit Referenzmustern- und / oder Schwellenwerten verglichen wird, wobei

d) bei Abweichungen vom Referenzmuster- und / oder von Schwellenwerten ein Warnsignal ausgegeben wird.

**13.** Verfahren nach Anspruch 8 oder 9, dadurch gekennzeichnet, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) mit Hilfe einer oder mehrerer Recheneinheiten die Frequenzen der gem. a) ermittelten und gespeicherten Zeiten durch Kehrwertbildung errechnet und danach gespeichert werden, wobei anschließend

c) ein Mittelwert der gem. b) ermittelten Frequenzen für eine oder mehrere Radumdrehungen errechnet und gespeichert wird, wonach

d) die Abweichungen der gem. b) ermittelten und gespeicherten Frequenzen von dem gem. c) errechneten Mittelwert ermittelt werden, und danach

e) die ermittelten Abweichungen mit Referenz- und / oder Schwellenwerten verglichen werden, wobei

f) bei Überschreitung der Referenz- und / oder Schwellenwerte ein Warnsignal ausgegeben wird.

**14.** Verfahren nach Anspruch 8 oder 9, dadurch gekennzeichnet, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) mit Hilfe einer oder mehrerer Recheneinheiten das Frequenzspektrum der gem. a) ermittelten und gespeicherten Zeiten einer Frequenzanalyse zur Ermittlung der spektralen Leistungsdichte (power spectral density) unterzogen wird, wobei anschließend

c) mit Hilfe einer oder mehrerer Recheneinheiten die ermittelten spektralen Leistungsdichten einer Integration über bestimmte ausgewählte Frequenzintervalle unterzogen und danach gespeichert werden, wonach

d) der Integralwert der ausgewählten Frequenzintervalle verglichen wird mit einem Referenz- oder Schwellenwert, und

e) bei Überschreitung der Referenz- oder Schwellenwerte ein Warnsignal ausgegeben wird.

15. Verfahren nach Anspruch 8 oder 9, dadurch gekennzeichnet, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) mit Hilfe einer oder mehrerer Recheneinheiten aus den gem. a) ermittelten und gespeicherten Zeiten die augenblicklichen Radgeschwindigkeiten errechnet und danach gespeichert werden, wobei anschließend

c) ein Mittelwert der gem. b) ermittelten Radgeschwindigkeiten für eine oder mehrere Radumdrehungen errechnet und gespeichert wird, wonach

d) die Abweichungen der gem. b) ermittelten und gespeicherten Radgeschwindigkeiten von dem gem. c) errechneten Mittelwert ermittelt werden, und danach

e) die ermittelten Abweichungen mit Referenz- und / oder Schwellenwerten verglichen werden, wobei

f) bei Überschreitung der Referenz- und / oder Schwellenwerte ein Warnsignal ausgegeben wird.

16. Verfahren nach Anspruch 8 oder 9, dadurch gekennzeichnet, daß ausgehend von der das Drehzahl-Ausgangssignal repräsentierenden Schwingung in der Signalverarbeitungseinrichtung

a) zunächst für mehrere aufeinanderfolgende und definierte Raddrehwinkel die entsprechenden Zeiten für die durch die definierten Raddrehwinkel bestimmten Teildrehungen des Rades ermittelt und gespeichert werden, und danach

b) mit Hilfe einer oder mehrerer Recheneinheiten aus den gem. a) ermittelten und gespeicherten Zeiten die augenblicklichen Radbeschleunigungen errechnet und danach gespeichert werden, wobei anschließend

c) ein Mittelwert der gem. b) errechneten Radbeschleunigungen für eine oder mehrere Radumdrehungen errechnet und gespeichert wird, wonach

d) die Abweichungen der gem. b) errechneten Radbeschleunigungen von dem gem. c) errechneten Mittelwert oder von einem Nullwert ermittelt werden, und danach

e) die ermittelten Abweichungen mit Referenz- und / oder Schwellenwerten verglichen werden, wobei

f) bei Überschreitung der Referenz- und / oder Schwellenwerte ein Warnsignal ausgegeben wird.

17. Verfahren nach Anspruch 11 bis 16, dadurch gekennzeichnet, daß die in einer oder mehreren Zeitkontrolleinrichtungen (Timer) gemessenen Zeitdifferenzen zwischen den Nulldurchgängen (Nulldurchgangszeiten) vor der weiteren Verarbeitung zunächst einer drehsynchronen Mittelung in der Art unterzogen werden, daß über mehrere Radumdrehungen aus den in Bezug auf eine Radumdrehung in gleichen Zeitintervallen bzw. in gleichen Drehwinkelintervallen gemessenen Nulldurchgangszeiten ein Mittelwert gebildet wird, der dann der weiteren Signalverarbeitung zugrunde liegt.

18. Vorrichtung zur Ermittlung des Notlaufzustandes eines Luftreifens für Kraftfahrzeugräder, wobei die Vorrichtung

a) mindestens an jeder Achse, vorzugsweise an jedem Rad angeordnete Sensor-Einrichtungen (2-5) beinhaltet, die eine permanent vorhandene erste periodische und zur Raddrehzahl proportionale Schwingung als Drehzahl- Ausgangssignal bereitstellen, wobei die Sensoreinrichtungen

b) aktive oder passive Magnetfeldsensoren (12,14,17) beinhaltet, die an mit dem Rad drehenden oder an feststehenden Teilen des Fahrzeuges angeordnet sind, und

c) magnetisch aktive oder passive Geber-Einrichtungen (11,13,16) beinhaltet, die relativ zu den Magnetfeldsensoren mit der Raddrehzahl rotieren und komplementär zu diesen an mit dem Rad drehenden oder an feststehenden Teilen des Fahrzeuges angeordnet sind und die eine zur Raddrehzahl proportionale periodische Magnetfeldänderung im Detektionsbereich der Magnetfeldsensoren erzeugen, wobei die Vorrichtung weiterhin

d) eine Signalverarbeitungseinrichtung (100) zur Verarbeitung und Auswertung der Drehzahl- Ausgangssignale sowie zur Ausgabe von Steuer- und / oder Warnsignalen aufweist,

e) Übertragungs- und Anzeigeeinrichtungen aufweist zur Übertragung und / oder Anzeige der Drehzahl- Ausgangssignale sowie der Steuer- und / oder Warnsignale, dadurch gekennzeichnet, daß

f) die Vorrichtung eine am Fahrzeugrad angeordnete Notlauf-Einrichtung aufweist, die im Notlaufzustand eine oder mehrere separat definierte, für den Notlaufzustand charakteristische und zur Raddrehzahl proportionale periodische Schwingungen erzeugt und der ersten Schwingung bzw. dem Drehzahl-Ausgangssignal überlagert,

g) die Signalverarbeitungseinrichtung gegebenenfalls Filtereinrichtungen zur Rauschfilterung aufweist und

h) ein oder mehrere Speichereinrichtungen zur Speicherung von Referenz- und / oder Schwellenwerten, sowie

i) eine Vergleichseinrichtung aufweist, die nach einer Verarbeitung die jeweiligen Drehzahl-Ausgangssignale der Achsen oder Räder mit einem oder mehreren Referenz- und / oder Schwellenwerten vergleicht und eine Überlagerung der ersten periodischen Schwingung mit den separaten und für den Notlaufzustand charakteristischen periodischen Schwingungen anhand einer Überschreitung der Referenz- und / oder Schwellenwerte detektiert und zu einem Warnsignal verarbeitet.

**19.** Vorrichtung nach Anspruch 18, dadurch gekennzeichnet, daß die Notlauf-Einrichtung zur Erzeugung einer oder mehrerer, für den Notlaufzustand charakteristischer und zur Raddrehzahl proportionaler periodischer Schwingungen als mindestens ein innerhalb des Reifens angeordneter, vorzugsweise auf der Felge abgestützter, Notlaufstützkörper (19) ausgebildet ist, der auf seiner Notlauffläche über den Umfang verteilte definierte Unstetigkeiten aufweist.

**20.** Vorrichtung nach Anspruch 19, dadurch gekennzeichnet, daß die über den Umfang verteilten Unstetigkeiten als Kavitäten oder Einbuchtungen (21) in der Notlauffläche (23) ausgebildet sind.

**21.** Vorrichtung nach Anspruch 18 bis 20, dadurch gekennzeichnet, daß die Notlauf-Einrichtung zur Erzeugung einer oder mehrerer, für den Notlaufzustand charakteristischer und zur Raddrehzahl proportionaler periodischer Schwingungen aus einer oder mehreren innerhalb des Reifenkörpers, vorzugsweise im Seitenwandbereich, ausgebildeten und den Reifen bei Luftverlust im Notlauf stabilisierenden, gegebenenfallls aus verschiedenen Schichten und / oder Lagen von Festigkeitsträgern aufgebauten Materialverstärkungen besteht, wobei die Materialverstärkungen über ihren Umfang verteilte definierte Unstetigkeiten aufweisen.

**22.** Vorrichtung nach Anspruch 21, dadurch gekennzeichnet, daß die über den Umfang verteilten definierten Unstetigkeiten als Materialanhäufungen oder Materialfehlstellen ausgebildet sind.

**23.** Vorrichtung nach Anspruch 19 bis 22, dadurch gekennzeichnet, daß eine erste Anzahl von gleichmäßig über den Umfang verteilten Unstetigkeiten ausgebildet sind.

**24.** Vorrichtung nach Anspruch 19 bis 23, dadurch gekennzeichnet, daß eine erste Anzahl von gleichmäßig über den Umfang verteilten Unstetigkeiten und eine zur ersten Anzahl unterschiedliche zweite Anzahl von gleichmäßig über den Umfang verteilten Unstetigkeiten ausgebildet sind.

**25.** Vorrichtung nach Anspruch 18 bis 24, dadurch gekennzeichnet, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter (35-38) für die Drehzahl-Ausgangssignale der einzelnen Räder oder Achsen, vorzugweise Tiefpaß-Filter, zur Filterung der Drehzahl-Ausgangssignale von hochfrequenten Rauschanteilen

b) eine oder mehrere Komparatorschaltungen, insbesondere Rechtecksignale erzeugende Schmitt-Trigger (39-42), für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (43-46) (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine oder mehrere den Zeitkontrolleinrichtungen parallel geschaltete Zähleinrichtungen (43'-46') für die einzelnen Signale aus Einzelimpulsen zur Ermittlung der Anzahl der erhaltenen Einzelimpulse bzw. der gemessenen Zeiten innerhalb einer definierten Zählzeit $T_L$ ,

e) einen oder mehrere Speicher (47) zur Speicherung der gem. c) ermittelten Zeiten und der gem. d) erhaltenen Anzahlen der Einzelimpulse innerhalb mehrerer aufeinanderfolgender Zählzeiten $T_L$ ,

f) eine Rechnerschaltung (48) zur Berechnung und Speicherung der mittleren Raddrehgeschwindigkeiten innerhalb der Zählzeiten $T_L$ für eine oder mehrere Radumdrehungen aus den für die Teildrehungen ermittelten Zeiten und deren Anzahlen innerhalb der Zählzeiten $T_L$ ,

g) eine Vergleichseinrichtung (49), welche die die gemittelten Raddrehgeschwindigkeiten bzw. deren Verlauf mit Referenz- und / oder Schwellenwerten vergleicht und bei Überschreitung der Referenz- und / oder Schwellenwerte ein Warnsignal ausgibt.

26. Vorrichtung nach Anspruch 18 bis 24, dadurch gekennzeichnet, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter (35-38) für die Drehzahl-Ausgangssignale der einzelnen Räder oder Achsen, vorzugweise Tiefpaß-Filter, zur Filterung der Drehzahl-Ausgangssignale von hochfrequenten Rauschanteilen,
b) eine oder mehrere Komparatorschaltungen, insbesondere Rechtecksignale erzeugende Schmitt-Trigger (39-42), für die Drehzahl-Ausgangssignale der einzelnen Räder oder Achsen, zur Umwandlung der Drehzahl-Ausgangssignale in Signale aus Einzelimpulsen,
c) eine oder mehrere Zeitkontrolleinrichtungen (50-53) (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,
d) einen oder mehrere Speicher (54), zur Speicherung der Zeiten mehrerer aufeinanderfolgender und gem c) durchgeführter Zeitmessungen ,
e) eine Rechnerschaltung (55) zur Berechnung eines Mittelwertes aus mehreren solchen aufeinanderfolgend ermittelten Zeiten für eine oder mehrere Radumdrehungen und zur Berechnung der Abweichungen der gem. c) ermittelten und gespeicherten Zeiten von dem errechneten Mittelwert ,

f) eine Vergleichseinrichtung (56), welche die ermittelten Abweichungen mit Referenz- und / oder Schwellenwerten vergleicht und bei Überschreitung der Referenz- und / oder Schwellenwerte ein Warnsignal ausgibt.

27. Vorrichtung nach Anspruch 18 bis 24, dadurch gekennzeichnet, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter (35-38) für die Drehzahl-Ausgangssignale der einzelnen Räder oder Achsen, vorzugweise Tiefpaß-Filter, zur Filterung der Drehzahl-Ausgangssignale von hochfrequenten Rauschanteilen,
b) eine oder mehrere Komparatorschaltungen, insbesondere Rechtecksignale erzeugende Schmitt-Trigger (39-42), für die Drehzahl-Ausgangssignale der einzelnen Räder oder Achsen, zur Umwandlung der Drehzahl-Ausgangssignale in Signale aus Einzelimpulsen,
c) eine oder mehrere Zeitkontrolleinrichtungen (50-53) (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,
d) eine oder mehrere Rechnereinheiten (57-60) zur Berechnung der Frequenzen der gem. c) ermittelten Zeiten durch Kehrwertbildung
e) einen oder mehrere Speicher (61), zur Speicherung der gem. d) berechneten Frequenzen,
f) eine Rechnerschaltung (62) zur Berechnung eines Mittelwertes aus mehreren solchen aufeinanderfolgend berechneten Frequenzen für eine oder mehrere Radumdrehungen und zur Berechnung der Abweichungen der gem. d) ermittelten und gespeicherten Frequenzen von dem errechneten Mittelwert,
g) eine Vergleichseinrichtung (63), welche die ermittelten Abweichungen mit Referenz- und / oder Schwellenwerten vergleicht und bei Überschreitung der Referenz- und / oder Schwellenwerte ein Warnsignal ausgibt.

28. Vorrichtung nach Anspruch 18 bis 24, dadurch gekennzeichnet, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter (35-38) für die Drehzahl-Ausgangssignale der einzelnen Räder oder Achsen, vorzugweise Tiefpaß-Filter, zur Filterung der Drehzahl-Ausgangssignale von hochfrequenten Rauschanteilen,

b) eine oder mehrere Komparatorschaltungen, insbesondere Rechtecksignale erzeugende Schmitt-Trigger (39-42), für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (50-53) (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine oder mehrere Rechnereinheiten (64-67) zur Durchführung einer Frequenzanalyse des Frequenzspektrums der gem. c) gemessenen Zeiten in Abhängigkeit von der Zeit (Zeiten-Signal) und zur Ermittlung der spektralen Leistungsdichte (power spectral density),

e) eine oder mehrere Recheneinheiten (68-71) zur Durchführung einer Integration der ermittelten spektralen Leistungsdichten über bestimmte ausgewählte Frequenzintervalle

f) einen oder mehrere Speicher (72), zur Speicherung mehrerer aufeinanderfolgend ermittelter Integralwerte,

g) eine Vergleichseinrichtung (73), welche die ermittelten Integralwerte der ausgewählten Frequenzintervalle mit einem Referenz- und / oder Schwellenwert vergleicht und bei Überschreitung der Referenz- und / oder Schwellenwerte ein Warnsignal ausgibt.

29. Vorrichtung nach Anspruch 18 bis 24, dadurch gekennzeichnet, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter für die Drehzahl-Ausgangssignale der einzelnen Räder oder Achsen, vorzugweise Tiefpaß-Filter, zur Filterung der Drehzahl-Ausgangssignale von hochfrequenten Rauschanteilen,

b) eine oder mehrere Komparatorschaltungen, insbesondere Rechtecksignale erzeugende Schmitt-Trigger, für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine Rechnerschaltung zur Berechnung der augenblicklichen Radgeschwindigkeiten entsprechend den gem. c) ermittelten Zeiten,

e) einen oder mehrere Speicher, zur Speicherung der gem. d) berechneten augenblicklichen Radgeschwindigkeiten,

f) eine Rechnerschaltung zur Berechnung eines Mittelwertes der gem. d) berechneten Radgeschwindigkeit für eine oder mehrere Radumdrehungen und zur Berechnung der Abweichungen der gem. d) ermittelten Radgeschwindigkeiten von dem errechneten Mittelwert,

g) eine Vergleichseinrichtung, welche die ermittelten Abweichungen mit Referenz- und / oder Schwellenwerten vergleicht und bei Überschreitung der Referenz- und / oder Schwellenwerte ein Warnsignal ausgibt.

30. Vorrichtung nach Anspruch 18 bis 24, dadurch gekennzeichnet, daß die Signalverarbeitungseinrichtung ausgehend von den Signaleingängen für die Drehzahl-Ausgangssignale der einzelnen Räder oder Achsen folgende Einrichtungen aufweist :

a) einen oder mehrere Filter für die Drehzahl-Ausgangssignale der einzelnen Räder oder Achsen, vorzugweise Tiefpaß-Filter, zur Filterung der Drehzahl-Ausgangssignale von hochfrequenten Rauschanteilen,

b) eine oder mehrere Komparatorschaltungen, insbesondere Rechtecksignale erzeugende Schmitt-Trigger, für die Drehzahl-Ausgangssignale der einzelnen Räder oder Achsen, zur Umwandlung der Drehzahl-Ausgangssignale in Signale aus Einzelimpulsen,

c) eine oder mehrere Zeitkontrolleinrichtungen (Timer), welche für mehrere aufeinanderfolgende und definierte Raddrehwinkel die entsprechenden Zeiten für die durch die definierten Raddrehwinkel bestimmten Teildrehungen des Rades messen, wobei die Messung der Zeiten durch die Ermittlung der Zeitdifferenzen zwischen zwei auf- bzw. absteigenden und mit den Zeiten für die Teildrehungen korrelierenden Flanken des Rechtecksignales erfolgt,

d) eine Rechnerschaltung zur Berechnung der augenblicklichen Radbeschleunigungen entsprechend den gem. c) ermittelten Zeiten,

e) einen oder mehrere Speicher, zur Speicherung der gem. d) berechneten augenblicklichen Radbeschleunigungen,

f) eine Rechnerschaltung zur Berechnung eines Mittelwertes der gem. d) berechneten Radbeschleunigung für eine oder mehrere Radumdrehungen und zur Berechnung der Abweichungen der gem. d) ermittelten Radbeschleunigungen von dem errechneten Mittelwert,

g) eine Vergleichseinrichtung, welche die ermittelten Abweichungen mit Referenz- und / oder Schwellenwerten vergleicht und bei Überschreitung der Referenz- und / oder Schwellenwerte ein Warnsignal ausgibt.

31. Verwendung eines Verfahrens zur Ermittlung des Notlaufzustandes eines Luftreifens für Fahrzeugräder nach Anspruch 1 bis 18 innerhalb eines Kontrollsystems für luftbereifte Fahrzeugräder, insbesondere innerhalb eines Anti-Blockier-Systems (ABS), wobei durch das Kontrollsystem mindestens an jeder Achse, vorzugsweise an jedem Rad, eine permanent vorhandene erste periodische und zur Raddrehzahl proportionale Schwingung erzeugt und als Drehzahl-Ausgangssignal einer Signalverarbeitungseinrichtung des Kontrollsystems zugeleitet wird, wobei im Notlaufzustand eine oder mehrere separat definierte, für den Notlaufzustand charakteristische und zur Raddrehzahl proportionale periodische Schwingungen der ersten Schwingung bzw. dem Drehzahl-Ausgangssignal überlagert werden, und bei dem die Signalverarbeitungsseinrichtung eine Überlagerung der ersten periodischen Schwingung mit der/den separat definierten und für den Notlaufzustand charakteristischen periodischen Schwingung(en) detektiert und zu einem Warnsignal verarbeitet.

FIG. 1

FIG. 2a

FIG. 2b

FIG. 2c

FIG. 3

FIG. 4

# FIG. 5a

**24**

# FIG. 5b

**201**

**202**

**200**

FIG. 6a

EP 1 031 442 A2

FIG. 6b

FIG. 7a

**FIG. 7b**

EP 1 031 442 A2

# FIG. 7c

EP 1 031 442 A2

FIG. 7d

FIG. 7e

**FIG. 7f**

FIG. 8

FIG. 9

EP 1 031 442 A2

FIG. 10

FIG. 11

EP 1 031 442 A2